# EUROPEAN PATENT APPLICATION

(11) **EP 4 478 778 A1**
(43) Date of publication of application: **18.12.2024**
(21) Application number: 22925416.4
(22) Date of filing: 12.02.2022
(51) Int. Cl.: H04W 24/10, H04W 52/02

(54) **USER ASSISTANCE INFORMATION PROCESSING METHOD AND DEVICE, COMMUNICATION EQUIPMENT AND STORAGE MEDIUM**

(71) Applicant: Beijing Xiaomi Mobile Software Co., Ltd., Beijing 100085 (CN)
(72) Inventor: LI, Yanhua, Beijing 100085 (CN); HU, Ziquan, Beijing 100085 (CN)
(74) Representative: Gunzelmann, Rainer
(86) International application number: PCT/CN2022/076115
(87) International publication number: WO 2023/151054

(57) **Abstract**

Embodiments of the present disclosure provide a user assistance information (UAI) processing method and device, communication equipment and a storage medium. The UAI processing method executed by user equipment (UE) may comprise: according to a relaxation measurement condition configuration, determining whether to enable a prohibition timer, wherein during the operation of the prohibition timer, the UE is prohibited from sending UAI indicating whether a relaxation measurement condition is met, and the relaxation measurement condition configuration indicates relaxation measurement conditions of radio link monitoring (RLM) and/or beam failure detection (BFD).

## Description

### TECHNICAL FIELD

The disclosure relates to, but is not limited to the technical field of wireless communication, and more particularly, to a method and an apparatus for processing user assistance information (UAI), a communication device and a storage medium.

### BACKGROUND

Beam-level communication links are easily blocked, resulting in poor communication quality or even a communication failure. When a downlink beam failure occurs, a user equipment (User Equipment, UE) may have a new candidate beam to replace a current failed beam. This allows the UE to avoid a process of radio link failure (RLF) beam failure recovery caused by the beam failure. The process of RLF beam failure recovery includes following: 1) Beam Failure Detection (BFD): a detection object is the current serving beam of the UE (for example, beams of a primary secondary cell (SpCell) and a secondary cell (SCell)), and measurement content is a synchronization signal reference signal (SSB-RS)/channel state information reference signal (CSI-RS) corresponding to the serving beam. A measurement result within an evaluation period (TEvaluate_BFD) is compared with an out-of-synchronization (Qout_LR) threshold. If all measurement results are lower than the threshold, a Beam Failure Instance Indication is triggered. 2) Before a configured beam failure detection timer (beamFailureDetectionTimer) expires, if count of layer 1 (L1) beam failure indications reaches a configured threshold (beamFailureInstanceMaxCount), the UE declares a beam failure and starts candidate beam detection (CBD). 3) Candidate Beam Detection (CBD): a detection object is a candidate beam set configured by a network for the UE, the measurement content is the SSB-RS and/or CSI-RS corresponding to the candidate beams, and the measurement is based on a comparison between a measurement result during an evaluation period (TEvaluate_CBD) and a configured threshold (Qin_LR). A candidate beam whose measurement result is higher than the threshold is used as an available new beam. The terminal notifies the network of the found of the available new beam, so that the network knows that the new beam can be used for downlink transmission.

Radio link monitoring (RLM) refers to: the UE monitors the downlink radio link quality of a primary cell, so as to indicate an out-of-synchronization/in-synchronization (out-of-sync/in-sync) state to a higher layer. The UE may perform radio link quality monitoring in an active (Active) downlink bandwidth part (DL BWP). If the active DL-BWP is an initial DL-BWP, and for multiplexing mode 2 or multiplexing mode 3 for Synchronization Signal / Physical Broadcast Cancel (SS/PBCH) block and control resource set (CORESET), when an associated SS/PBCH block index is provided by the radio link monitoring from a reference signal (Radio Link Monitoring RS), the UE may use the associated SS/PBCH block to perform the RLM.

### SUMMARY

Embodiments of the disclosure provide a method and an apparatus for processing user assistance information (UAI), a communication device and a storage medium.

Embodiments of a first aspect of the disclosure provide a method for processing UAI, performed by a user equipment (UE). The method includes:
determining whether to enable a prohibition timer according to a configuration of a relaxation measurement condition, in which during running of the prohibition timer, the UE is prohibited from sending UAI about whether the relaxation measurement condition is met;
in which, the configuration of the relaxation measurement condition indicates: a relaxation measurement condition of radio link monitoring (RLM) and/or a relaxation measurement condition of beam failure detection (BFD).

Embodiments of a second aspect of the disclosure provide a method for processing UAI, performed by a base station. The method includes:
receiving UAI indicating whether a UE meets a relaxation measurement condition, in which the UAI is reported by the UE according to timing information included in a configuration of the relaxation measurement condition, or according to a prohibition timer when the configuration of the relaxation measurement condition does not include the timing information;
in which the configuration of the relaxation measurement condition indicates: a relaxation measurement condition of radio link monitoring (RLM) and/or a relaxation measurement condition of beam failure detection (BFD).

Embodiments of a third aspect of the disclosure provide an apparatus for processing UAI. The apparatus includes:
a first determining module, configured to determine whether to enable a prohibition timer according to a configuration of a relaxation measurement condition, in which during running of the prohibition timer, the UE is prohibited from sending UAI about whether the relaxation measurement condition is met;
in which the configuration of the relaxation measurement condition indicates: a relaxation measurement condition of radio link monitoring (RLM) and/or a relaxation measurement condition of beam failure detection (BFD).

Embodiments of a fourth aspect of the disclosure provide an apparatus for processing UAI. The apparatus is performed by a base station and includes:
a receiving module, configured to receive UAI indicating whether a user equipment (UE) meets a relaxation measurement condition, in which the UAI is reported by the UE according to timing information included in a configuration of the relaxation measurement condition, or according to a prohibition timer when the configuration of the relaxation measurement condition does not include the timing information;
in which the configuration of the relaxation measurement condition indicates: a relaxation measurement condition of radio link monitoring (RLM) and/or a relaxation measurement condition of beam failure detection (BFD).

Embodiments of a fifth aspect of the disclosure provide a communication device, including a processor, a transceiver, a memory, and an executable program stored on the memory and capable of being executed by the processor. When the processor executes the executable program, the method for processing UAI provided in the embodiments of the first aspect or the second aspect of the disclosure is performed.

Embodiments of a sixth aspect of the disclosure provide a computer storage medium having an executable program stored thereon. When the executable program is executed by a processor, the method for processing UAI provided in the embodiments of the first aspect or the second aspect of the disclosure is performed.

With the technical solution provided by embodiments of the present disclosure, embodiments of the disclosure, whether to enable the prohibition timer is determined according to the configuration of the relaxation measurement condition, which can reduce unnecessary maintenance when the prohibition timer is not required in the UE, and reduce the power consumption of UE for maintaining the prohibition timer. It should be understood that the foregoing general description and the following detailed description are exemplary and explanatory only, and are not intended to limit the embodiments of the disclosure.

### BRIEF DESCRIPTION OF THE DRAWINGS

The drawings, which are incorporated into the specification and constitute a part of the specification, illustrate embodiments in conformity with the disclosure, and serve to explain the principle of the disclosure together with the specification.
FIG. 1 is a schematic diagram of a wireless communication system according to an embodiment of the disclosure.
FIG. 2 is a flowchart of a method for processing user auxiliary information (UAI) according to an embodiment of the disclosure.
FIG. 3A is a flowchart of a method for processing UAI according to an embodiment of the disclosure.
FIG. 3B is a flowchart of a method for processing UAI according to an embodiment of the disclosure.
FIG. 4 is a flowchart of a method for processing UAI according to an embodiment of the disclosure.
FIG. 5 is a flowchart of a method for processing UAI according to an embodiment of the disclosure.
FIG. 6 is a flowchart of a method for processing UAI according to an embodiment of the disclosure.
FIG. 7 is a block diagram of an apparatus for processing UAI according to an embodiment of the disclosure.
FIG. 8 is a block diagram of an apparatus for processing UAI according to an embodiment of the disclosure.
FIG. 9 is a block diagram of a user equipment (UE) according to an embodiment of the disclosure.
FIG. 10 is a block diagram of a communication device according to an embodiment of the disclosure.

### DETAILED DESCRIPTION

The example embodiments will be described in detail here, and examples thereof are shown in the accompanying drawings. When the following descriptions are referred to the accompanying drawings, unless otherwise indicated, the same numbers in different drawings represent the same or similar elements. The implementations described in the following example embodiments do not represent all implementations consistent with embodiments of the disclosure. Rather, they are merely examples of apparatuses and methods consistent with some aspects of embodiments of the disclosure as detailed in the appended claims.

The terms used in embodiments of the disclosure are only for the purpose of describing specific embodiments and are not intended to limit the embodiments of the disclosure. The singular forms "a" and "the" used in the disclosure are also intended to include plural forms, unless the context clearly indicates otherwise. It should also be understood that the term "and/or" used in the disclosure means and includes any or all possible combinations of one or more associated listed items.

It should be understood that, although the terms first, second, third, etc. may be used in embodiments of the disclosure to describe various types of information, such information shall not be limited to these terms. These terms are only used to distinguish the same type of information. For example, without departing from the scope of the disclosure, first information may also be referred to as second information, and similarly, and the second information may also be referred to as the first information. Depending on the context, for example, the word "if' as used herein may be interpreted as "while" or "when" or "in response to determining".

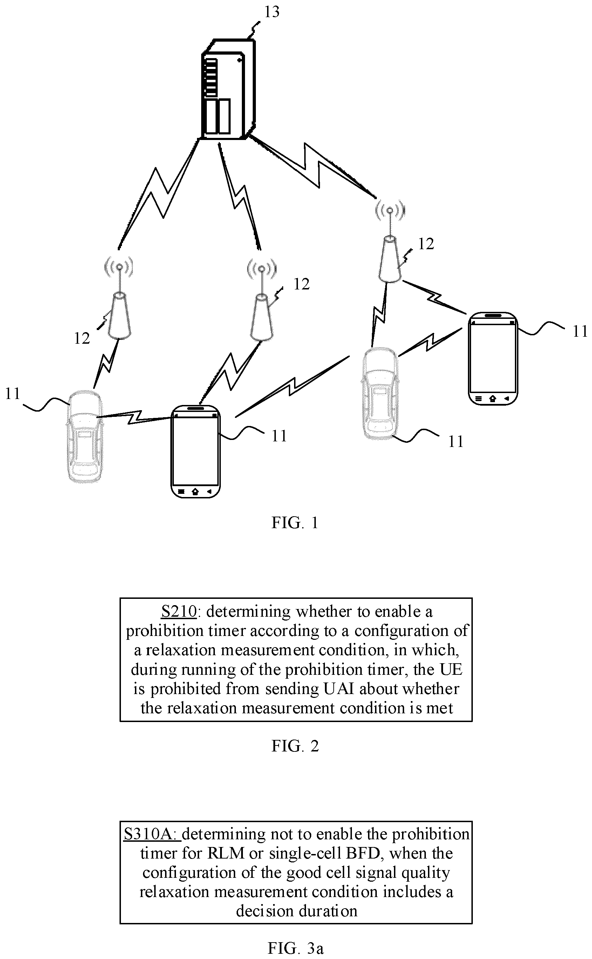

With reference to FIG. 1, FIG. 1 illustrates schematic diagram of a wireless communication system according to an embodiment of the disclosure. As illustrated in FIG. 1, the wireless communication system is a communication system based on cellular mobile communication technology, and the wireless communication system may include: several user equipments (UEs) 11 and several access devices 12.

The UE 11 may be may be a device that provides voice and/or data connectivity to a user. The UE 11 may communicate with one or more core networks via a Radio Access Network (RAN). The UE 11 may be an Internet of Things (IoT) user equipment, such as a sensor device, a mobile phone, and a computer with an IoT user equipment. For example, UE 11 may be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a user equipment (UE). Or, the UE 11 may be an unmanned aerial vehicle device. Or, the UE 11may be an in-vehicle device, for example, an electronic control unit (ECU) having a wireless communication function, or a wireless communication device external to the ECU. Or, the UE 11 can also be a roadside device, for example, a street light, a signal light, or other roadside devices having the wireless communication function.

The access device 12 may be a network device in the wireless communication system. The wireless communication system may be a fourth generation mobile communication technology (4G) system, also known as a long term evolution (LTE) system, or, a 5G system, also called a new radio (NR) system or a 5G NR system. Alternatively, the wireless communication system may also be a next-generation system of the 5G system. An access network in the 5G system may be called a New Generation-Radio Access Network (NG-RAN), or a machine-type communication (MTC) system.

The access device 12 may be an evolved access device (eNB) employed in a 4G system. Or, the access device 12 may be an access device (gNB) with a centralized distributed architecture employed in a 5G system. When the access device 12 adopts the centralized distributed architecture, it usually includes a Central Unit (CU) and at least two Distributed Units (DUs). The CU is equipped with protocol stacks of a Packet Data Convergence Protocol (PDCP) layer, a Radio Link Control (RLC) layer, or a Media Access Control (MAC) layer. The DU is equipped with a protocol stack of a physical (PHY) layer, and the specific implementation of the access device 12 is not limited in embodiments of the disclosure.

A wireless connection can be established between the access device 12 and the UE 11 via a radio interface. The radio interface is a radio interface based on the 5G standard, such as a NR. Or, the radio interface may also be a radio interface based on the standard of a next generation of 5G.

As illustrated in FIG. 2, FIG. 2 is a flowchart of a method for processing user auxiliary information (UAI) according to an embodiment of the disclosure. The method is performed by a UE, and the method includes following steps.

S210, whether to enable a prohibition timer is determined according to a configuration of a relaxation measurement condition, in which, during running of the prohibition timer, the UE is prohibited from sending UAI about whether the relaxation measurement condition is met.

The configuration of the relaxation measurement condition indicates: a relaxation measurement condition of radio link monitoring (RLM) and/or a relaxation measurement condition of beam failure detection (BFD).

In an embodiment, the configuration of the relaxation measurement condition is configuration information of the relaxation measurement condition, which is used to include one or more relaxation parameters meeting the relaxation measurement condition. It is worth noting that the measurement relaxation condition can also be called a measurement relaxation criterion.

The configuration of the relaxation measurement condition may or may not include timing information. If the configuration of the relaxation measurement condition contains the timing information, it means that the configuration of the relaxation measurement condition configures a timer. If the configuration of the relaxation measurement condition does not contain the timing information, it means that the configuration of the relaxation measurement condition does not define (configure) a timer.

In an embodiment of the present disclosure, the S110 may include: determining whether to enable (or use) the prohibition timer according to whether the configuration of the relaxation measurement condition includes the timing information. For example, the configuration of the relaxation measurement condition includes the timing information, and it is determined not to enable (configure) the prohibition timer, and/or, the configuration of the relaxation measurement condition does not include the timing information, and it is determined to enable the prohibition timer.

The prohibition timer is a timer used to prevent the UE from frequently reporting UAI. If the prohibition timer is enabled when the configuration of the relaxation measurement condition has already configured the timer, the UE may maintain two timers when using the UAI to report whether the relaxation measurement condition of the RLM and/or the relaxation measurement condition of the BFD is met currently, which increases the overhead of the UE. In view of this, in embodiments of the disclosure, whether the prohibition timer is enabled is determined according to the configuration of the relaxation measurement condition. If the prohibition timer is not enabled, the UE can be controlled to report the UAI according to the timer defined by the configuration of the relaxation measurement condition. On the one hand, this can also prevent the UE from frequently reporting the UAI indicating whether the relaxation measurement condition is met. On the other hand, the UE only maintains one timer for the decision of whether the relaxation measurement condition is met and the report of the UAI, which reduces unnecessary timer maintenance and reduces power consumption of the UE, and a conflict problem of the UAI report caused by the conflict between timing durations of the two timers can be avoided.

In an embodiment, the configuration of the relaxation measurement condition includes:
a configuration of a good cell signal quality relaxation measurement condition;
   and/or,
a configuration of a low mobility relaxation measurement condition.

For example, the configuration of the relaxation measurement condition includes:
the configuration of the good cell signal quality relaxation measurement condition;
   or,
the configuration of the low mobility relaxation measurement condition and the configuration of the good cell signal quality relaxation measurement condition.

That is, in an embodiment, the relaxation measurement condition for RLM and/or BFD may be a separately configuration of the good cell signal quality relaxation measurement condition, and the UE may receive the configuration of the good cell signal quality relaxation measurement condition separately from a network or according to a protocol agreement..

In another embodiment, the relaxation measurement condition for BFD and/or RLM can be y configured with both the configuration of the low mobility relaxation measurement condition and the configuration of the good cell signal quality relaxation measurement condition.

In a detailed embodiment, the relaxation measurement condition for BFD and/or RLM may also be configured only with the low mobility relaxation measurement condition.

The good cell signal quality relaxation measurement condition includes: signal quality of a cell signal measured by the UE being higher than a corresponding threshold value, which means that a location where the UE is located currently does not need or has a small probability to perform cell selection, handover, cell reselection or beam switching, and a measurement of RLM and/or BFD for the cell selection, handover, cell reselection, or beam switching can be appropriately relaxed. The measurement of RLM and/or BFD may include at least one of: suspending the measurement for a period of time, reducing a measurement frequency, or reducing a frequency of evaluating whether the signal quality is good enough or a frequency of evaluating the link quality based on a measurement value, etc., thus reducing the power consumption of the UE by a way of relaxing the measurement. In a word, when performing the relaxation measurement, a relaxation measurement of the RLM may be performed according to a relaxation measurement configuration of the RLM, and/or a relaxation measurement of the BFD may be performed according to a relaxation measurement configuration of the BFD. How to relax RLM and/or BFD may refer to related technologies, which will not be described in detail here.

The low mobility relaxation measurement condition includes: a fluctuation value of signal quality of a cell signal measured by the UE being less than a corresponding threshold. If the fluctuation value of a cell signal currently measured by the UE is smaller than the corresponding threshold value, it means that a current displacement of the UE is very small, and similarly, it indicates that the UE does not need or has a small probability to perform the cell selection, handover, cell reselection, or beam switching currently, and a measurement of RLM and/or BFD for the cell selection, handover, cell reselection, or beam switching can be appropriately relaxed. For example, the threshold value corresponding to the low mobility relaxation measurement condition is S_{SearchDeltaP} configured on the network side or agreed upon in the protocol.

As illustrated in FIG. 3A, embodiments of the disclosure provide a method for processing UAI, performed by a UE. The method includes following steps.

S310A, for RLM or single-cell BFD, when the configuration of the good cell signal quality relaxation measurement condition includes a decision duration, it is determined not to enable the prohibition timer.

The measurement of the RLM is at a granularity of cell-group level. For example, for a master cell group (MCG) or a secondary cell group (SCG), one RLM configuration is used to perform RLM.

The BFD measurement may be for different cells, and different BFD configurations may be used to perform the BFD measurement of different cells. It can be for a primary cell or a secondary cell. Therefore, the BFD is performed for a single cell.

In embodiments of the disclosure, for RLM and the single-cell BFD, when the good cell signal quality relaxation measurement condition is configured with the decision duration, i.e., which means there is a decision timer, the prohibition time is not enabled in embodiments of the disclosure, to reduce the maintenance of one time, and to avoid a conflict between UAI reporting frequencies caused by the different timing durations of the decision timer and the prohibition timer. This is because that the good cell signal quality relaxation measurement condition is configured with the included decision duration, which plays a role in preventing the frequent reporting of the terminal during the decision process.

When a duration in which a measurement signal value of the UE is greater than the first threshold reaches the decision duration, it may be determined that the good cell signal quality relaxation measurement condition is met.

For a situation where RLM and BFD relaxation measurement conditions are configured in the primary cell (Pcell) and/or the primary secondary cell (Pscell), when a duration in which a RLM measurement signal value of the UE is greater than the first threshold reaches the decision duration, and a duration in which a BFD measurement signal value of the UE is greater than the first threshold also reaches the decision duration, it is determined that the good cell signal quality relaxation measurement condition is met. In this case, a good signal quality threshold of RLM and a good signal quality threshold of the BFD can be the same or can be configured separately.

The first threshold may be equal to: an in-synchronization threshold (Qᵢₙ) plus an offset (Offset).

For example, for a multi-connection UE, its serving cell includes: a primary cell and a secondary cell. In some cases, the secondary cell may further include: a primary secondary cell and other secondary cells.

For example, for a Multi-Radio Dual Connectivity (MR-DC) and/or a New Radio-Evolved Universal Mobile Telecommunications System (UMTS) Terrestrial Radio Access (NR-E-UTRA Dual Connectivity, NE-DC) UE, the BFD may be performed only on the primary cell. The UMTS is the abbreviation of Universal Terrestrial Radio Access, and the corresponding Chinese is: Global Terrestrial Radio Access.

For another example, an Evolved UMTS Terrestrial Radio Access Dual Connectivity (E-UTRA-NR Dual Connectivity, NE-DC) UE may only perform the BFD for a primary secondary cell (Pcell).

Then, the BFD measurement for the dual-connection UE may only be performed for the single-cell BFD.

While, for the New Radio-Evolved UMTS Terrestrial Radio Access (NG-RAN E-UTRA-NR Dual Connectivity, NGEN-DC) UE, BFD on of both the primary cell and the secondary cell may be performed, and the BFD in not the single-cell BFD.

As an embodiment, there is no secondary cell in a certain cell group (MCG or SCG), and the BFD measurement may be only for the single-cell BFD. For example, for a MCG, only a Pcell exists; or for a SCG, only a Pscell exists;

As an embodiment, there is at least one secondary cell, the BFD measurement cannot be performed only for the single-cell BFD. For example, for the MCG, there are a Pcell and secondary cells (scell); or for the SCG, there are a Pscell and other secondary cells (scell). Other secondary cells may be secondary cells other than the primary secondary cell.

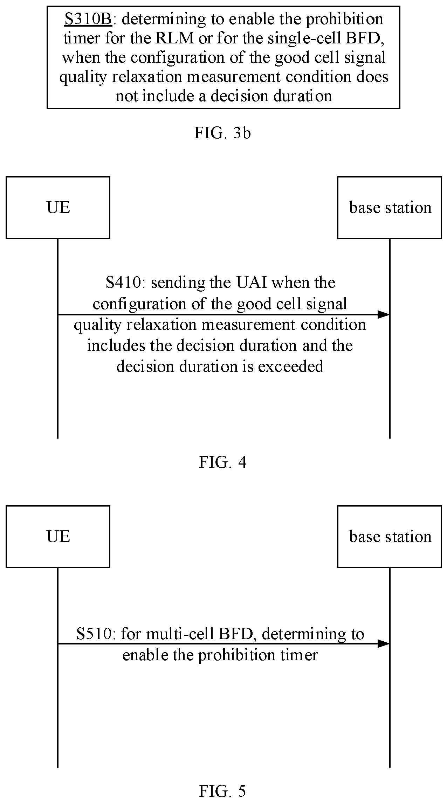

As illustrated in FIG. 3B, embodiments of the disclosure provide a method for processing UAI, which is performed by a UE, the method includes following steps.

S310B, for the RLM or for the single-cell BFD, when the configuration of the good cell signal quality relaxation measurement condition does not include a decision duration, it is determined to enable the prohibition timer.

If the configuration of the good cell signal quality relaxation measurement condition does not include the decision duration, which means that the current configuration of the good cell signal quality relaxation measurement condition does not configure a decision timer, the prohibition timer is enabled to prevent the UE from reporting UAI too frequently.

The method for processing the UAI illustrated in FIG. 3A and FIG. 3B can be used in a scenario where the configuration of the relaxation measurement condition includes a separately configuration of the good cell signal quality relaxation measurement condition, or in a scenario where the configuration of the relaxation measurement condition includes both the configuration of the good cell signal quality relaxation measurement condition and the configuration of the low mobility relaxation measurement condition. As illustrated in FIG. 4, embodiments of the disclosure provide a method for processing UAI, which is performed by a UE, the method includes following steps.

S410, the UAI is sent when the configuration of the good cell signal quality relaxation measurement condition includes the decision duration and the decision duration is exceeded.

This embodiment can be implemented in combination with any of the aforementioned methods for processing UAI, or implemented separately.

For example, a decision timer is started according to the decision duration. After the decision timer expires, if there is UAI that may be reported to the network, the UAI is sent to the base station, and no UAI is sent when there is no UAI that needs to be reported to the network.

In some embodiments, when the configuration of the good cell signal quality relaxation measurement condition includes the decision duration, sending the UAI after the decision duration exceeded includes:
when the configuration of the good cell signal quality relaxation measurement condition includes the decision duration, and when a duration in which a measurement signal value of the UE is greater than a first threshold reaches the decision duration, sending UAI indicating that the relaxation measurement condition is met after the decision duration is exceeded;
   or,
when the configuration of the good cell signal quality relaxation measurement condition includes the decision duration, and when a duration in which a measurement signal value of the UE is not greater than a first threshold reaches the decision duration, sending UAI indicating that the relaxation measurement condition is not met after the decision duration is exceeded.

In some embodiments, when the configuration of the good cell signal quality relaxation measurement condition includes the decision duration, if the UE continuously detects that the signal quality is greater than the first threshold within the decision duration, and if a duration of continuously detecting that the signal quality is greater than the first threshold is longer than or equal to the decision duration, UAI requesting measurement relaxation is sent after the duration is greater than the decision duration.

In some embodiments, when the configuration of the good cell signal quality relaxation measurement condition includes the decision duration, if the UE detects that the signal quality is not greater than the first threshold or is lower than the first threshold, it sends UAI requesting measurement relaxation (it does not require the signal quality requirement is always met during the time range). In this way, the terminal can report the reduction of the signal quality in time without being limited by the decision duration. That is, the decision duration included in the configuration of the good cell signal quality relaxation measurement condition is only be used for one-way and not for two-way.

The UAI indicating that the relaxation measurement is expected may be used to indicate to the base station that the UE expects measurement relaxation.

The UAI indicating not expecting relaxation measurement may be used to indicate to the base station that the UE does not expect to perform measurement relaxation.

The UAI indicating that the relaxation measurement is expected may be used to indicate to the base station that the terminal meets the measurement relaxation requirement to implicitly express that the UE expects the relaxation.

The UAI indicating not expecting relaxation measurement may be used to indicate to the base station that the terminal does not meet the measurement relaxation requirement to implicitly express that the UE does not expect to perform measurement relaxation.

As an example, the UAI may report that the terminal expects to perform relaxation or the terminal does not expect to perform relaxation.

As an example, the UAI can report that the terminal meets the measurement relaxation requirement or the terminal does not meet the measurement relaxation requirement.

In some embodiments, when the configuration of the good cell signal quality relaxation measurement condition includes the decision duration, the measurement signal value of the UE is not greater than the first threshold within the decision duration, the UAI indicating that the relaxation measurement condition is not met after the decision duration is exceeded.

In an embodiment, the configuration of the relaxation measurement condition includes: the configuration of the low mobility relaxation measurement condition and the configuration of the good cell signal quality relaxation measurement condition, the decision duration included in the configuration of the good cell signal quality relaxation measurement condition reuses a duration threshold defined by the configuration of the low mobility relaxation measurement condition. That is, in this embodiment, the decision duration is equal to the duration threshold defined by the configuration of the low mobility relaxation measurement condition.

The decision duration included in the configuration of the good cell signal quality relaxation measurement condition reuses the duration threshold defined by the configuration of the low mobility relaxation measurement condition. Even if the UE performs the decisions of both the good cell signal quality relaxation measurement condition and the low mobility relaxation measurement condition, only one timer is need to maintained.

In embodiments of the disclosure, the decision duration included in the configuration of the good cell signal quality relaxation measurement condition reusing the duration threshold defined by the configuration of the low mobility relaxation measurement condition includes:
if the configuration of the good cell signal quality relaxation measurement condition includes the decision duration, the decision duration included in the configuration of the good cell signal quality relaxation measurement condition is ignored, and the duration threshold defined by the configuration of the low mobility relaxation measurement condition is reused;
   or,
if the configuration of the good cell signal quality relaxation measurement condition does not include a decision duration, the duration threshold defined by the configuration of the low mobility relaxation measurement condition is reused as the decision duration included in the configuration of the good cell signal quality relaxation measurement condition.

In some other embodiments, the configuration of the relaxation measurement condition includes: the configuration of the low mobility relaxation measurement condition and the configuration of the good cell signal quality relaxation measurement condition, the decision duration included in the configuration of the good cell signal quality relaxation measurement condition is reused as a duration threshold defined by the configuration of the low mobility relaxation measurement condition.

For example, in this embodiment, a time threshold T1 is configured by the low mobility relaxation measurement condition, and a decision duration T0 is included in the configuration of the good cell signal quality relaxation measurement condition. When performing the decision about the low mobility relaxation measurement condition, T1 can be ignored, and it is determined whether a current status of the UE meets the mobility relaxation condition according to T0.

When a duration in which the measurement signal value of the UE is greater than the first threshold reaches the decision duration, it is determined that the good cell signal quality relaxation measurement condition is met.

When a duration in which a fluctuation value of the signal quality measured by the UE is smaller than a second threshold reaches the duration threshold, it is determined that the low mobility relaxation measurement condition is met.

In some embodiments, the S210 includes:
for the RLM or for single-cell BFD, when the configuration of the low mobility relaxation measurement condition defines a duration threshold, it is determined not to enable the prohibition timer.

In an embodiments, when the duration in which the fluctuation value of the signal quality measured by the UE is smaller than the second threshold reaches the duration threshold, the low mobility relaxation measurement condition is met.

Generally, the configuration of the low mobility relaxation measurement condition may define the duration threshold. If the configuration of the relaxation measurement condition for the RLM and/or BFD includes: the configuration of the low mobility relaxation measurement condition and the configuration of the good cell signal quality relaxation measurement condition, the reporting of UAI may be controlled according to any one of the duration threshold defined by the configuration of the low mobility relaxation measurement condition and the decision duration included in the configuration of the good cell signal quality relaxation measurement condition, without the need of enabling the prohibition timer. In an embodiment, if the configuration of the relaxation measurement condition for the RLM and/or BFD includes: the configuration of the low mobility relaxation measurement condition and the configuration of the good cell signal quality relaxation measurement condition, a larger one of the duration threshold and the decision duration is selected to start a decision timer for indicating whether the relaxation condition is met and/or a timer for controlling the reporting of the UAI; or, a smaller one of the duration threshold and the decision duration is selected to start a decision timer for indicating whether the relaxation condition is met and/or a timer for controlling the reporting of the UAI; or, any one of the duration threshold and the decision duration is selected to start a decision timer for indicating whether the relaxation condition is met and/or a timer for controlling the reporting of the UAI, without the need of starting the prohibition timer.

In an embodiment, whether the good cell signal quality relaxation measurement condition is met and whether the low mobility relaxation measurement condition is met are indicated by a same piece of UAI indicating whether the UE meets the relaxation measurement condition.

To reduce the number of pieces of UAI reported by the UE, whether the good cell signal quality relaxation measurement condition is met and whether the low mobility relaxation measurement condition is met can be informed to the base station through the same UAI, to inform the base station whether the UE itself meets the relaxation measurement condition.

A piece of UAI may include a field, and the field may include one or more bits, indicating whether the UE meets the relaxation measurement condition.

The UAI may further include: a condition meeting field, which is used to indicate the relaxation measurement condition that the current status of the UE meets.

In an embodiment, the condition meeting field may include: two different fields, in which one field indicates whether the good cell signal quality relaxation measurement condition is met, and the other field indicates whether the low mobility relaxation measurement condition is met.

In an embodiment, the condition meeting field may only include one field, and the field may have two bits. Different bit values of the two bits may indicate at least one of the following states:
meeting both the good cell signal quality relaxation measurement condition and the low mobility relaxation measurement condition;
meeting the good cell signal quality relaxation measurement condition and not meeting the low mobility relaxation measurement condition;
meeting the low mobility relaxation measurement condition and not meeting the good cell signal quality relaxation measurement condition;
not meeting both the good cell signal quality relaxation measurement condition and the low mobility relaxation measurement condition.

Through the reporting of the condition meeting field, even if the UE does not meet the relaxation measurement condition, the base station can indicate whether a certain UE performs relaxation measurement according to the demand.

In some embodiments, the method includes:
when both the good cell signal quality relaxation measurement condition and the low mobility relaxation measurement condition are met, sending UAI indicating that the relaxation measurement condition is met to a base station;
   or,
when at least one of the good cell signal quality relaxation measurement condition or the low mobility relaxation measurement condition is not met, sending UAI indicating that the relaxation measurement condition is not met to a base station.

In this way, both the good cell signal quality relaxation measurement condition and the low mobility relaxation measurement condition are met, it means that the measurement can be relaxed, and the measurement power consumption of the UE can be reduced.

When at least one of the good cell signal quality relaxation measurement condition or the low mobility relaxation measurement condition is not met, the UAI indicating that the relaxation measurement condition is not met is sent, so that the UE can reduce the phenomenon of unable to perform the cell selection, handover, cell reselection, or beam switching caused by performing unnecessary measurement relaxation.

In another embodiment, whether the good cell signal quality relaxation measurement condition is met and whether the low mobility relaxation measurement condition is met are indicated by different pieces of UAI indicating whether the UE meets the relaxation measurement condition, respectively.

In this way, the UE can use different pieces of UAI respectively, and report whether it meets the relaxation measurement conditions according to different relaxation measurement conditions.

In an embodiment, when the UE acquires both the configuration of the good cell signal quality relaxation measurement condition and the configuration of the low mobility relaxation measurement condition, the UE may perform the decision of the good cell signal quality relaxation measurement condition and the decision of the low mobility relaxation measurement condition respectively according to the two configurations. In another embodiment, when the UE acquires both the configuration of the good cell signal quality relaxation measurement condition and the configuration of the low mobility relaxation measurement condition, the UE may select one configuration separately to judge the corresponding condition. In this case, it uses the corresponding UAI to report whether it meets the relaxation measurement condition.

In some embodiments, the configuration of the relaxation measurement condition includes the configuration of the good cell signal quality relaxation measurement condition, and the same configuration of the good cell signal quality relaxation measurement condition is set for the RLM and the BFD.

For example, the configuration of the relaxation measurement condition is the configuration of the good cell signal quality relaxation measurement condition, and the RLM and the BFD share one configuration of the good cell signal quality relaxation measurement condition.

If the RLM and the BFD are set with the same or share one configuration of the good cell signal quality relaxation measurement condition, the decision durations corresponding to the RLM and the BFD respectively are the same, and the first thresholds for determining whether the signal quality is good are also the same. In this case, the UE may only receive one configuration from the network side, or may obtain, according to a network protocol, a configuration configured for a cell signal quality relaxation condition.

In some other embodiments, the configuration of the relaxation measurement condition includes the configuration of the good cell signal quality relaxation measurement condition, and the RLM and the BFD are respectively configured with different configuration of the good cell signal quality relaxation measurement condition.

The RLM and the BFD are two kinds of measurements, thus different configurations of the good cell signal quality relaxation measurement condition can be configured respectively for the two.

For example, at least the first thresholds used for determining the good cell signal quality for the two configurations of the good cell signal quality relaxation measurement condition configured for the RLM and the BFD are different, sharing the same decision duration, or none of the two use the decision duration.

For another example, at least the first thresholds used for determining the good cell signal quality for the two configurations of the good cell signal quality relaxation measurement condition configured for the RLM and the BFD are different, and the decision durations for the two configurations of the good cell signal quality relaxation measurement condition configured for the RLM and the BFD are different.

If the RLM and the BFD use different configurations of the good cell signal quality relaxation measurement condition, targeted measurement relaxation of the RLM and the BFD can be performed.

In some embodiments, the configuration of the relaxation measurement condition includes the configuration of the low mobility relaxation measurement condition and the configuration of the good cell signal quality relaxation measurement condition, and a same configuration of the low mobility relaxation measurement condition is set for the RLM and the BFD and different configurations of the good cell signal quality relaxation measurement condition are set for the RLM and the BFD respectively. For example, the configuration of the relaxation measurement condition includes the configuration of the low mobility relaxation measurement condition and the configuration of the good cell signal quality relaxation measurement condition, the RLM and the BFD share one configuration of the low mobility relaxation measurement condition, and different configurations for the relaxation measurement conditions of good cell signal quality are configured respectively;
or,
the configuration of the relaxation measurement condition includes the configuration of the low mobility relaxation measurement condition and the configuration of the good cell signal quality relaxation measurement condition, and a same configuration of the low mobility relaxation measurement condition is set for the RLM and the BFD, and the RLM and the BFD share one configuration of the good cell signal quality relaxation measurement condition. That is, the configuration of the relaxation measurement condition includes the configuration of the low mobility relaxation measurement condition and the configuration of the good cell signal quality relaxation measurement condition, the RLM and the BFD share one configuration of the low mobility relaxation measurement condition, and share one configuration of the good cell signal quality relaxation measurement condition.

If the network side or the protocol agreement agreed that the measurement relaxation for the RLM and the BFD may use both the good cell signal quality relaxation measurement condition and the low mobility relaxation measurement condition, the low-mobility configuration can be shared because the low mobility relaxation measurement condition is performed based on a relative value such as the fluctuation value of the signal quality, thereby reducing the number of configuration sets. The configuration of the good cell signal quality relaxation measurement condition may be shared or may not be shared, which is determined according to specific network condition and/or the UE requirement.

In some embodiments, the method also includes:
when the configuration of the relaxation measurement condition includes the configuration of the low mobility relaxation measurement condition and the configuration of the good cell signal quality relaxation measurement condition, determining to report the UAI about whether the UE meets the relaxation measurement condition according to a combined decision switch.

There are two configurations for the relaxation condition, which relaxation condition is used to determine the UAI indicating whether the UE meets the relaxation measurement condition.

Through the setting of the combined decision switch, the UE can be triggered to send UAI indicating whether the relaxation measurement condition is met by using different combinations of relaxation measurement conditions according to the combined decision switch, without receiving the configuration of the relaxation condition again.

In an embodiment, determining to report the UAI about whether the UE meets the relaxation measurement condition according to the combined decision switch includes at least one of the following:
when the combined decision switch is a first value and when it is determined that both the low mobility relaxation measurement condition and the good cell signal quality relaxation measurement condition are met, sending the UAI indicating that the relaxation measurement condition is met;
when the combined decision switch is the first value and when it is determined that at least one of the low mobility relaxation measurement condition or the good cell signal quality relaxation measurement condition is not met, sending the UAI indicating that the relaxation measurement condition is not met;
when the combined decision switch is a second value and when it is determined that the good cell signal quality relaxation measurement condition is met, sending the UAI indicating that the relaxation measurement condition is met; or
when the combined decision switch is the second value and when at least one of the low mobility relaxation measurement condition or the good cell signal quality relaxation measurement condition is met, sending the UAI indicating that the relaxation measurement condition is met.

In an embodiment, the method may further include:
when the combined decision switch is the second value and when one or more of the low mobility relaxation measurement condition and the good cell signal quality relaxation measurement condition are not met, sending the UAI indicating that the relaxation measurement condition is not met.

In some embodiments, when the UE determines that the relaxation measurement is not expected, the UE may not send the UAI, thereby further reducing the number of times that the UE sends the UAI, and further reducing the power consumption generated by the UE for sending the UAI. In this case, when the base station fails to receive the UAI sent by the UE indicating whether the UE expects to the measurement relaxation, the base station determines that the UE does not meet the relaxation measurement condition.

In some embodiments, the combined decision switch is determined according to a protocol agreement;
or,
the combined decision switch is determined according to a network configuration.

If the combined decision switch agreed in the protocol, the UE can obtain the combined decision switch by querying the protocol. For example, the protocol can set different combination decision switches for different types of UEs.

In some embodiments, the combined decision switch may be configured by the network side, for example, configured by the base station through RRC signaling or Media Access Control-Control Element (MAC CE). In some embodiments, the network configuration may also be the configuration of the relaxation measurement condition itself.

As illustrated in FIG. 5, an embodiment of the present disclosure provides a method for processing UAI, which is performed by a UE. The method includes following steps.

S510, for multi-cell BFD, it is determined to enable the prohibition timer.

In this case, regardless of whether there is a configured timer in the configuration of the relaxation measurement condition itself, the multi-cell BFD may enable the prohibition timer to prevent the UE from frequently reporting UAI. Although the configuration of the relaxation measurement condition itself is configured with a timer to prevent frequent reporting of the terminal, a prohibition timer is also needed to prevent frequent reporting caused by changes in a list of carriers that meet the requirements in a carrier aggregation scenario.

For the BFD, regardless of whether the configuration of the relaxation measurement condition itself has a configured timer, for the multi-cell or single-cell BFD scenarios, the prohibition timer may be enabled to limit the UE from frequently reporting UAI. This is a unified process, that is, for the BFD, the prohibition timer may be enabled to limit the frequent reporting of UAI by the UE.

In an embodiment, for a certain cell group (MCG or SCG), for a carrier aggregation UE, its serving cell includes: a primary cell and a secondary cell.

For example, for the Multi-Radio Dual Connectivity (MR-DC) and/or New Radio-Evolved UMTS Terrestrial Radio Access (NR-E-UTRA Dual Connectivity, NE-DC) UE, the BFD may be performed only on the primary cell. The UMTS is the abbreviation of Universal Terrestrial Radio Access, and the corresponding Chinese is: Global Terrestrial Radio Access.

For another example, an Evolved UMTS Terrestrial Radio Access Dual Connectivity (E-UTRA-NR Dual Connectivity, NE-DC) UE may only perform the BFD for a primary secondary cell (Pcell).

For a scenario where carrier aggregation exists in a certain cell group (MCG or SCG), the BFD for both the primary cell and the secondary cell may be required. In this case, it does not belong to the single-cell BFD, but the multi-cell BFD. The prohibition timer is enabled to limit the frequent reporting of UAI when the relaxation measurement conditions of the BFD for multiple cells are respectively met.

As an embodiment, there is no secondary cell in a certain cell group (MCG or SCG), the BFD measurement may only be single-cell BFD. For example, for the MCG, only Pcell exists; or for the SCG, only Pcell exists.

As an embodiment, one or more secondary cells exist, the BFD measurement cannot be only for the single-cell BFD, that is, the multi-cell BFD. For example, for the MCG, there are the Pcell and other scells; or for the SCG, there are the Pcell and other scells.

The method further includes: for the multi-cell BFD, the reporting of the UAI is allowed when the prohibition timer expires, and/or the reporting of the UAI is not allowed when the prohibition timer is operated (that is, not timeout).

In embodiments of the present disclosure, in order to realize one report, to facilitate the base station to know whether the measurement of all serving cells of the UE meets the relaxation measurement condition, or, whether the UE expects to relax the measurement or does not expect to relax the measurement for each cell. The UAI may carry a cell list, and the cell list includes one or more cell identifications, and these cell identifications may indicate whether the UE meets the relaxation measurement condition in the corresponding serving cell.

The cell identification may include: a cell identifier such as a physical cell identification, and may also be a dedicated number allocated by the UE to its own serving cell. For example, there are three serving cells of the UE, each of which has its own physical cell identification (PCI), and the cell identification in the cell list may be the PCI. However, in order to reduce bit overhead, the UE and the base station can perform cell numbering according to their own serving cell functions. For example, a primary cell corresponding to a Master Node (MN) is Cell 1, a primary secondary cell of a Secondary Node (MN) is Cell 2, and the other cells are respectively ordered based on their function, such as Cell 3 and so on. In this way, compared with carrying the relatively long identification information such as the PCI, the bit overhead of the UAI can be reduced.

In some embodiments, one cell list corresponds to one bitmap, one bit in the bitmap corresponds to one cell, and the cell corresponding to each bit in the bitmap can be configured by the network side. Two bit values of one bit in the bitmap may respectively indicate two relaxation requirements, i.e., the UE expecting to relax the measurement and not expecting to relax the measurement.

In some embodiments, sending the UAI carrying the cell list according to the met relaxation measurement condition for the multi-cell BFD includes:
creating the cell list for the multi-cell BFD; and
sending the UAI according to the cell list when the prohibition timer expires.

For example, sending the UAI according to the cell list when the prohibition timer expires includes:
sending the UAI carrying the cell list when the prohibition timer expires;
   or,
when the prohibition timer expires, sending the UAI carrying the bitmap corresponding to each serving cell of the UE according to the cell list.

When entering the multi-cell BFD, the cell list is created. When the prohibition timer expires, the UAI carrying the cell list is sent. In this way, the network side can know, by receiving the UAI once, the requirements of the UE for whether relaxation measurement is expected for all its own serving cells.

In some embodiments, creating the cell list can be understood as: maintaining the cell list.

In some embodiments, creating the cell list for the multi-cell BFD includes:
when a primary cell of the UE meets the relaxation measurement condition, creating the cell list including a cell identification of the primary cell;
when a secondary cell of the UE meets the relaxation measurement condition, adding a cell identification of the secondary cell that meets the relaxation measurement condition to the cell list; or
when a secondary cell whose cell identification is in the cell list does not meet the relaxation measurement condition, deleting the cell identification of the secondary cell that does not meet the relaxation measurement condition from the cell list

In some embodiments, the method further includes:
clearing or deleting the cell list when the primary cell of the UE does not meet the relaxation measurement condition; and
sending UAI indicating not expecting relaxation measurement when the cell list is empty or the cell list is deleted.

In some embodiments, when the primary cell does not meet the relaxation measurement condition, the created cell list may be deleted or cleared. If the cell list is deleted or cleared, the UE may also send UAI indicating that the relaxation measurement condition is not met to the network side.

In some embodiments, when neither the primary cell of the MN nor the primary secondary cell of the SN meets the relaxation measurement condition, the created cell list is deleted or cleared; and/or when one of the primary cell of the MN and the primary secondary cell of the SN still meets the relaxation measurement condition, the cell list can be maintained further. That is, the cell list is not deleted or cleared.

In some embodiments, the method further includes:
when a cell identification in the cell list is updated, sending the UAI carrying an updated cell list when the prohibition timer expires; in which, the cell identification in the cell list being updated includes: adding and/or deleting the cell identification in the cell list.

The cell identification in the cell list being updated, includes but is not limited to at least one of:
a new cell identification being added to the cell list; or
an existed cell identification being deleted in the cell list.

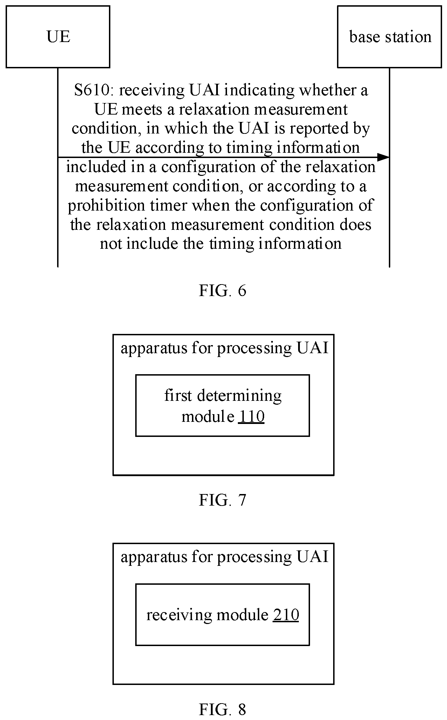

As illustrated in FIG. 6, embodiments of the disclosure provide a method for processing UAI, which is performed by a base station, the method includes following steps.

S610: UAI indicating whether a UE meets a relaxation measurement condition is received, in which the UAI is reported by the UE according to timing information included in a configuration of the relaxation measurement condition, or according to a prohibition timer when the configuration of the relaxation measurement condition does not include the timing information.

The configuration of the relaxation measurement condition indicates: a relaxation measurement condition of RLM and/or a relaxation measurement condition of BFD.

In embodiments of the present disclosure, the UAI received by the base station and sent by the UE indicating whether the UE meets the relaxation measurement condition may be reported according to a timer defined by the configuration of the relaxation measurement condition when the configuration of the relaxation measurement condition has included timing information (that is, a timer is configured), or reported according to the prohibition timer specially designed to prevent frequent UAI reporting when the configuration of the relaxation measurement condition does not include the timing information.

In some embodiments, in an embodiment, the configuration of the relaxation measurement condition includes:
a configuration of a good cell signal quality relaxation measurement condition;
   and / or,
a configuration of a low mobility relaxation measurement condition.

For example, the configuration of the relaxation measurement condition includes:
the configuration of the relaxation measurement condition includes:
the configuration of the good cell signal quality relaxation measurement condition;
   or,
the configuration of the low mobility relaxation measurement condition and the configuration of the good cell signal quality relaxation measurement condition;

The configuration of the good cell signal quality relaxation measurement condition is at least used to determine the good cell signal quality relaxation measurement condition; the configuration of the low mobility relaxation measurement condition is at least used to determine the low mobility relaxation measurement condition.

That is, in an embodiment, the relaxation measurement condition for RLM and/or BFD may be a separately configuration of the good cell signal quality relaxation measurement condition, and the UE may receive the configuration of the good cell signal quality relaxation measurement condition separately from a network or according to a protocol agreement.

In another embodiment, the relaxation measurement condition for BFD and/or RLM can be y configured with both the configuration of the low mobility relaxation measurement condition and the configuration of the good cell signal quality relaxation measurement condition.

In a detailed embodiment, the relaxation measurement condition for BFD and/or RLM may also be configured only with the low mobility relaxation measurement condition.

The good cell signal quality relaxation measurement condition includes: signal quality of a cell signal measured by the UE being higher than a corresponding threshold value, which means that a location where the UE is located currently does not need or has a small probability to perform cell selection, handover, cell reselection or beam switching, and a measurement of RLM and/or BFD for the cell selection, handover, cell reselection, or beam switching can be appropriately relaxed. The measurement of RLM and/or BFD may include at least one of: suspending the measurement for a period of time, reducing a measurement frequency, or reducing a frequency of evaluating whether the signal quality is good enough or a frequency of evaluating the link quality based on a measurement value, etc., thus reducing the power consumption of the UE by a way of relaxing the measurement. In a word, when performing the relaxation measurement, a relaxation measurement of the RLM may be performed according to a relaxation measurement configuration of the RLM, and/or a relaxation measurement of the BFD may be performed according to a relaxation measurement configuration of the BFD. How to relax RLM and/or BFD may refer to related technologies, which will not be described in detail here.

The low mobility relaxation measurement condition includes: a fluctuation value of signal quality of a cell signal measured by the UE being less than a corresponding threshold. If the fluctuation value of a cell signal currently measured by the UE is smaller than the corresponding threshold value, it means that a current displacement of the UE is very small, and similarly, it indicates that the UE does has a small probability to perform the cell selection, handover, cell reselection, or beam switching currently, and a measurement of RLM and/or BFD for the cell selection, handover, cell reselection, or beam switching can be appropriately relaxed. For example, the threshold value corresponding to the low mobility relaxation measurement condition is S_{SearchDeltaP} configured on the network side or agreed upon in the protocol.

In an embodiment, the configuration of the good cell signal quality relaxation measurement condition includes a decision duration, and for the RLM or the single-cell BFD, the UAI is reported when the decision duration is exceeded;
or,
the configuration of the good cell signal quality relaxation measurement condition does not include the decision duration, and for the RLM or the single-cell BFD, the UAI is reported when the prohibition timer expires.

An application scenario of this embodiment may be that the UE is configured with the configuration of the good cell signal quality relaxation measurement condition. In some cases, this embodiment can also be applied to a scenario where the UE is configured with both the configuration of the good cell signal quality relaxation measurement condition and the configuration of the low mobility relaxation measurement condition.

In some embodiments, the configuration of the relaxation measurement condition includes: the configuration of the low mobility relaxation measurement condition and configuration of the good cell signal quality relaxation measurement condition, and a decision duration included in the configuration of the good cell signal quality relaxation measurement condition reuses a duration threshold defined by the configuration of the low mobility relaxation measurement condition.

In a case where the configuration of the good cell signal quality relaxation measurement condition does not include the decision duration or the decision duration is included, the duration threshold defined by the configuration of the low mobility relaxation measurement condition can be reused, so that the two relaxation conditions use the same timer for the decision of whether the corresponding relaxation condition is met and the reporting of UAI.

In some embodiments, the configuration of the low mobility relaxation measurement condition defines the duration threshold, and for the RLM or the single-cell BFD, the UAI is reported when the duration threshold is reached;
or,
the configuration of the low mobility relaxation measurement condition does not limit the decision duration, and for the RLM or the single-cell BFD, the UAI is reported when the prohibition timer expires.

In some embodiments, for multi-cell BFD, the UAI is reported during the prohibition timer.

For the multi-cell BFD, the UAI is reported according to the forbidden timer regardless of whether the configuration of the relaxation measurement condition includes the timing information.

In some embodiments, for the multi-cell BFD, the UAI includes a cell list. A cell identification included in the cell list includes: a cell that meets the relaxation measurement condition, or a cell that does not meet the relaxation measurement condition.

If the cell identification in the cell list indicates a cell that meets the relaxation measurement condition, it is defaulted that the UE does not meet the relaxation measurement condition when in a serving cell indicated by a cell identification that is not included in the cell list.

If the cell identification in the cell list indicates a cell that does not meet the relaxation measurement condition, it is defaulted that the UE meets the relaxation measurement condition when in a serving cell indicated by a cell identification that is not included in the cell list.

In some embodiments, UAI includes two cell lists, in which one cell list indicates cells meeting the relaxation measurement condition, and the other cell list indicates cells not meeting the relaxation measurement condition. In this way, when the base station receives this type of UAI, the base station is able to know which cells the UE expects to perform measurement relaxation and which cells the UE does not expect to perform measurement relaxation according to the cell lists included in the current UAI, without the need to determine a current serving cell list of the UE.

In some embodiments, the method further includes:
sending a network configuration including a combined decision switch when the configuration of the relaxation measurement condition includes the configuration of the low mobility relaxation measurement condition and the configuration of the good cell signal quality relaxation measurement condition.

UAI indicating that the UE meets the relaxation measurement condition is sent by the UE when the combined decision switch is a first value and when both the low mobility relaxation measurement condition and the good cell signal quality relaxation measurement condition are met.
Or,
UAI indicating that the UE does not meet the relaxation measurement condition is sent by the UE when the combined decision switch is a first value and when at least one of the low mobility relaxation measurement condition or the good cell signal quality relaxation measurement condition is not met.
   Or,
UAI indicating that the UE meets the relaxation measurement condition is sent by the UE when the combined decision switch is a second value and when the good cell signal quality relaxation measurement condition is met.
   Or,
UAI indicating that the UE meets the relaxation measurement condition is sent by the UE is when the combined decision switch is a second value and when at least one of the good cell signal quality relaxation measurement condition or the low mobility relaxation measurement condition is met.

In some embodiments, the configuration of the relaxation measurement condition is the configuration of the good cell signal quality relaxation measurement condition, and the same configuration of the good cell signal quality relaxation measurement condition is set for the RLM and the BFD. In some embodiments, the configuration of the relaxation measurement condition is the configuration of the good cell signal quality relaxation measurement condition, and the RLM and the BFD share a configuration of the good cell signal quality relaxation measurement condition.
Or,
The configuration of the relaxation measurement condition is the configuration of the good cell signal quality relaxation measurement condition, and the RLM and the BFD are respectively configured with different configurations of the good cell signal quality relaxation measurement condition.

In some embodiments, the configuration of the relaxation measurement condition may be a configuration of the good cell signal quality relaxation measurement condition, and the RLM and the BFD are respectively configured with different configurations of the good cell signal quality relaxation measurement condition.

In some embodiments, the configuration of the relaxation measurement condition is the configuration of the low mobility relaxation measurement condition and the configuration of the good cell signal quality relaxation measurement condition, the RLM and the BFD share a configuration of the low mobility relaxation measurement condition, and the RLM and the BFD are configured with different configurations of the good cell signal quality relaxation measurement condition. That is, the configuration of the relaxation measurement condition is the configuration of the low mobility relaxation measurement condition and the configuration of the good cell signal quality relaxation measurement condition, the same configuration of the low mobility relaxation measurement condition is set for the RLM, and different configurations of the good cell signal quality relaxation measurement condition are set for the RLM and the BFD respectively; or,
the configuration of the relaxation measurement condition is the configuration of the low mobility relaxation measurement condition and the configuration of the good cell signal quality relaxation measurement condition, the RLM and the BFD share one configuration of the low mobility relaxation measurement condition, and share one configuration of the good cell signal quality relaxation measurement condition. For example, the configuration of the relaxation measurement condition is the configuration of the low mobility relaxation measurement condition configuration and the configuration of the good cell signal quality relaxation measurement condition, the same configuration of the low mobility relaxation measurement condition is set for the RLM and the BFD, and the same configuration of the good cell signal quality relaxation measurement condition is set for the RLM and the BFD.

If the configuration of the relaxation measurement condition is: the configuration of the low mobility relaxation measurement condition and the configuration of the good cell signal quality relaxation measurement condition, the RLM and the BFD at least share one configuration of the low mobility relaxation measurement condition or are set with the same configuration of the low mobility relaxation measurement condition, which can at least reduce signaling overhead between the UE and the network side.

In some embodiments, the configuration of the relaxation measurement condition is the configuration of the low mobility relaxation measurement condition and the configuration of the good cell signal quality relaxation measurement condition.

UAI indicates both of that the low mobility relaxation measurement condition is met and that the good cell signal quality relaxation measurement condition is met;
or,
UAI indicating that the low mobility relaxation measurement condition is met and UAI indicating that the good cell signal quality relaxation measurement condition is met are different.

When the configuration of the relaxation measurement condition is the configuration of the low mobility relaxation measurement condition and the configuration of the good cell signal quality relaxation measurement condition, UAI can be sent to indicate that the low mobility relaxation measurement condition is met and the good cell signal quality relaxation measurement condition is met. Or the different pieces of UAI may be sent respectively for indicating that the low mobility relaxation measurement condition is met and indicating that the good cell signal quality relaxation measurement condition is met.

A method for a terminal to report UAI, where the UAI is used for the terminal to assist a base station in performing RLM measurement relaxation and/or BFD relaxation.

The network configures the UAI report of the RLM/BFD measurement relaxation through a RRC message, and the terminal may determine according to a parameters meeting the relaxation measurement condition corresponding to the configuration of the relaxation measurement condition.

One way is to only configure the configuration of the good cell signal quality relaxation measurement condition for the UE. In this case, a parameter included in the configuration of the good cell signal quality relaxation measurement condition includes but is not limited to at least one of:
an offset value (Offset);
a decision metric (metric): a L1-SINR of a reference signal being higher than Qᵢₙ+offset; L1-SINR is a layer-1 signal-to-noise ratio, Qᵢₙ may be a synchronization threshold; or
a decision duration (T).

Another way is to configure the configuration of the good cell signal quality relaxation measurement condition and the configuration of the good cell signal quality relaxation measurement condition for the UE. In this case, the parameter included in the configuration of the low mobility relaxation measurement condition may include at least one of:
a duration threshold (TSearchDeltaP), or a threshold (SSearchDeltaP) of a fluctuation value of cell signal quality.

The parameter included in the configuration of the good cell signal quality relaxation measurement condition may include at least one of:
an offset
a decision metric (metric): the L1-SINR of the reference signal being higher than Qᵢₙ+offset; or
a decision duration (T).

Layer-3 filtering may be performed or may not be performed on a L1-SINR of a reference signal.

In the case where only the configuration of the good cell signal quality relaxation measurement condition is configured, if the decision duration T of the good signal quality is configured, the UAI reporting does not require to configure or enable a prohibit timer.

As an example:
if the terminal meets an entry condition within the T, i.e., a condition of a measurement value of the reference signal being higher than Qᵢₙ+offset is always met during the T, UAI indicating that the RLM relaxation measurement is expected or UAI indicating that the relaxation measurement condition is met is reported.

If the terminal meets a condition of leaving the relaxation measurement within T, i.e., a condition of a measurement value of the reference signal being not higher or lower than Qᵢₙ+offset is always met during the T, UAI indicating that the RLM relaxation measurement is not expected or the relaxation measurement condition is not met is reported.

Or, T is only used for one-way reporting:

As an embodiment, if the terminal meets the entry condition within T, i.e., a condition of a measurement value of the reference signal being higher than Qᵢₙ+offset is always met during the T, UAI indicating that the RLM relaxation measurement is expected or UAI indicating that the relaxation measurement condition is met is reported.

If a measurement value of the reference signal of the terminal is not higher or lower than Qᵢₙ+offset, UAI indicating that the RLM relaxation measurement is not expected or the relaxation measurement condition is not met is reported. In this way, when the signal quality drops, the UE can report in time without being restricted by the UAI.

If the decision duration T for the good signal quality is not configured, a prohibition timer (Prohibit timer) may be configured or enabled for the UAI reporting. At this time, the prohibition timer restricts the reporting of UAI in following two embodiments.

As an embodiment, if the terminal meets that the reference signal threshold is higher than Qᵢₙ+offset within the duration, the UAI indicating that the RLM relaxation measurement is expected is reported. The reporting is performed when the prohibition timer is not started, and it is not necessary to enable the prohibition timer.

If the reference signal threshold is not higher than Qᵢₙ+offset within the duration, the reporting may not be limited by the prohibition timer, and the prohibition timer is enabled after the reporting.

As an embodiment,
if the terminal meets that the reference signal threshold is higher than Qᵢₙ+offset within the duration, the UAI indicating that the RLM relaxation measurement is expected is reported. The reporting is performed when the prohibition timer is not started, and the prohibition timer is enabled.

If the reference signal threshold is not higher than Qᵢₙ+offset within the duration, the reporting is performed when the prohibition timer is not started, and the prohibition timer is enabled.

If the relaxation measurement condition for the UE is: the configuration of the low mobility relaxation measurement condition, the UAI reporting does not require configuration of a prohibition timer (prohibit timer). This because the duration threshold (TSearchDeltaP) of the low mobility has a role of preventing the terminal from frequently reporting the auxiliary information.

If the relaxation measurement condition for the UE is: the configuration of the low mobility relaxation measurement condition and the configuration of the good cell signal quality relaxation measurement condition configuration, the decision duration T of the good cell signal quality relaxation measurement condition can reuse the TSearchDeltaP of the low mobility.

Further, if the terminal uses the same UAI for reporting for the low mobility relaxation measurement condition and the good cell signal quality relaxation measurement condition (two criteria), the UAI reporting does not require configuration of a prohibit timer (Prohibit timer). Furthermore, in this case, the reporting condition of the UAI includes both the two relaxation measurement conditions, i.e., the low mobility relaxation measurement condition and the good cell signal quality relaxation measurement condition, being met.

As an example,
if the terminal always meets an entry condition of the good signal quality criterion and the signal fluctuation is lower than the threshold SSearchDeltaP during the duration of TSearchDeltaP, UAI indicating that the RLM relaxation measurement is expected is reported.

If the terminal meets an exit condition of at least one of the configuration criteria within the duration of TSearchDeltaP, such as the criteria of the fluctuation of the signal quality being lower than the threshold (SSearchDeltaP)is not met, and/or the reference signal threshold is not higher than Qᵢₙ+offset within the duration, UAI indicating that the RLM relaxation measurement is not expected is reported.

Further, if the terminal uses different UAI messages for reports for the two criteria, the UAI reporting for the configuration of the low mobility relaxation measurement condition does not require configuration of a prohibition timer (Prohibit timer).

As an example:
the network configures a decision parameter required for UAI reporting corresponding to the BFD relaxation measurement condition through an RRC message.

If the configuration of the relaxation measurement condition for the RLM is configured, the BFD can reuse some parameters of the configuration of the relaxation measurement condition for the RLM. For example, the parameter of the configuration of the low mobility relaxation measurement condition continue to be used. In this case, only parameters of the configuration of the good cell signal quality relaxation measurement condition needs to be delivered, or both the parameter of the configuration of the low mobility relaxation measurement condition and the parameter of the configuration of the good cell signal quality relaxation measurement condition are reused.

If parameters of the BFD measurement relaxation have been configured, the RLM reuses some of the parameters of the BFD measurement relaxation. For example, the parameter for the configuration of the low mobility relaxation measurement condition are used. In this case, only the parameter for the good signal quality criterion need to be delivered, or all parameters are reused.

When the terminal is configured to perform UAI reporting for the BFD measurement relaxation, the reporting manner may be reporting in a form of a cell list (celllist). If a cell (cell) in the cell list (celllist) changes, reporting of UAI may be triggered again.

For example, decision for a primary cell (Pcell) of a MN node or a primary secondary cell (Pscell) of a SN node is performed first, to determine whether the BFD relaxation measurement condition is met, and if so, a reporting cell list (celllist) is created, and the primary cell is put into the cell list (celllist).

Then decision for the secondary cells is performed one by one to determine whether the good cell signal quality relaxation measurement condition in the BFD relaxation measurement condition is met. If so, the secondary cell is put into the cell list (celllist), and the cell list (celllist) is reported through UAI. When a new cell (cell) is added to the cell list (celllist) later, the updated cell list (celllist) may be reported through the UAI.

If the cell signal quality relaxation condition in the relaxation measurement condition of BFD is not met, the secondary cell is removed from the cell list (celllist); the cell list (celllist) with one cell identification reduced needs to be reported through the UAI.

If the primary cell does not meets the condition, the entire cell list (celllist) is set to be empty.

In some embodiments, the cell identifications in the cell list may not distinguish the primary cell or the secondary cell, that is, all cell identifications that meet the relaxation measurement condition are put into the cell list. When all cell identifications of the UE do not meet the relaxation measurement condition, the cell list may be cleared or deleted; and/or, as long as the UE has a serving cell that meets the relaxation measurement condition, a cell list may be created and the corresponding cell identification may be added to the cell list.

Further, when configuring the terminal to perform UAI reporting of the BFD measurement relaxation, the prohibit timer (prohibit timer) must be configured. The purpose is: after reporting a group of cells that meet the condition, if a new cell (cell) meets the condition and is to be reported, it needs to wait until the prohibit timer expires.

Further, if there is only a primary cell (Pcell or Pscell) in a certain cell group (MCG or SCG), it is not necessary to configure the prohibition timer (prohibit timer) when configuring the terminal to perform the UAI reporting of the BFD measurement relaxation. This is because that there is only one cell in a single cell group for performing the decision of the BFD measurement relaxation, and the prohibition timer is not necessary.

Further, the above scenarios can be uniformly processed. That is, for a certain cell group (MCG or SCG), regardless of whether there is carrier aggregation configuration, the prohibition timer (prohibit timer) can be enabled for BFD.

The prohibition timer can be used in two directions. That is, the reporting of that there is a cell meets or does not meet the conditions needs to be restricted by the prohibition timer.

The prohibition timer may also be used in one direction. That is, after UAI reporting for a cell meeting the relaxation measurement condition completes, the prohibition timer (prohibit timer) is enable. If a new cell meets the relaxation measurement condition, it needs to wait for the prohibition timer expires. If the original cell no longer meets the relaxation measurement condition or an exit condition of the relaxation measurement is met, it does not need to be restricted by the prohibition timer (prohibit timer). That is, even if the prohibition timer has not expired at this time, the UAI containing the cell list can still be reported. For the RLM/BFD measurement relaxation, if the low mobility relaxation measurement condition and the good cell signal quality relaxation measurement condition both have corresponding configurations, the conditions are determined according to an instruction sent by the network or agreed by an protocol, the UAI decision is a combined decision using one or two conditions.

For example, the network configures a combined decision switch, for example, the switch=1. Then when both the two configuration criteria should be met before reporting the information indicating that the measurement relaxation is expected.

For example, the network does not configure the combined decision switch, or the switch= 0. If the relaxation measurement condition good cell signal quality is met, the terminal can report that it expects to perform the measurement relaxation.

For the RLM, if the network can deliver UAI reporting configuration (optional) of the configuration of the low mobility relaxation measurement condition and the configuration of the good cell signal quality relaxation measurement condition, the terminal reports UAI indicating whether the low mobility relaxation measurement condition is met and UAI indicating whether the good cell signal quality relaxation measurement condition is met. The configuration of the low mobility relaxation measurement condition is an optional configuration, and the configuration of the good cell signal quality relaxation measurement condition is a mandatory configuration. Similarly, reporting the UAI indicating whether the low mobility relaxation measurement condition is met is an optional reporting, and reporting the UAI indicating whether the good cell signal quality relaxation measurement condition is met is a mandatory reporting.

For the BFD, if the network can deliver the configuration of the low mobility relaxation measurement condition and the configuration of the good cell signal quality relaxation measurement condition, the terminal reports UAI indicating whether the low mobility relaxation measurement condition is met and UAI indicating whether the good cell signal quality relaxation measurement condition is met. The configuration of the low mobility relaxation measurement condition is an optional configuration, and the configuration of the good cell signal quality relaxation measurement condition is a mandatory configuration. Similarly, reporting the UAI indicating whether the low mobility relaxation measurement condition is met is an optional reporting, and reporting the UAI indicating whether the good cell signal quality relaxation measurement condition is met is a mandatory reporting.

For the BFD and RLM, if the network can deliver the configuration of the low mobility relaxation measurement condition, a configuration (offset 1) of the good cell signal quality relaxation measurement condition for the BFD, and a configuration (offset 2) of the good cell signal quality relaxation measurement condition for the RLM. The offsets of the two can be the same. The terminal reports UAI indicating whether the configuration of the low mobility relaxation measurement condition is met. The terminal may also report UAI for the good cell signal quality relaxation measurement condition for the RLM and UAI for the good cell signal quality relaxation measurement condition for the BFD. For the RLM, it is possible to only report UAI indicating whether a primary cell meets the good cell signal quality relaxation measurement condition. For the BFD, UAI containing a cell list can be reported, and the cell identification in the cell list can be used to indicate whether a primary cell and/or a secondary cell meets the good cell signal quality relaxation measurement condition.

Further, for the case where the relaxation measurement conditions (or measurement relaxation criteria) for RLM and BFD are configured to be performed for the primary cell (Pcell) and/or the primary secondary cell (Pscell), when a duration in which a RLM measurement signal value of the UE exceeds a first threshold reaches the decision duration, and a duration in which a BFD measurement signal value of the UE exceeds the first threshold reaches the decision duration, it is determined that the good cell signal quality relaxation measurement condition is met. For a non-carrier aggregation scenario, the same UAI can be used to report the satisfaction of RLM and BFD relaxation measurement conditions. That is, both the RLM measurement signal value and the BFD measurement signal value meet the requirements, i.e., a combined decision. That is, if all of the configured RLM measurement reference signals and BFD measurement reference signals meet the threshold requirement, it is reported that the RLM and BFD relaxation are expected. Otherwise, if one type of measurement signal does not meet the requirement, for example, the RLM (or BFD) measurement signal does not meet the requirement or one measurement reference signal in all the configured RLM measurement reference signals and BFD measurement reference signals does not meet the threshold requirement, it is reported that RLM and BFD relaxation are not expected. For the carrier aggregation scenario, after a combined decision under the non-carrier aggregation scenario is performed on the primary cell, it is determined whether to put its identification in the condition-met cell list. That is, a combined decision of RLM and BFD relaxation is performed. For the secondary cell, it is still necessary to make a per cell decision before determining whether to put it into the condition-met cell list. In this case, only the BFD relaxation decision is performed for the secondary cell.

For the UAI configuration of the configuration of the low mobility relaxation measurement condition, for the MR-DC, NE-DC, decision on the RSRP measurement result of the Pcell is performed; for EN-DC, decision on the RSRP measurement result of Pcell is performed.

If the configuration of the good cell signal quality relaxation measurement condition is used for the RLM, for the MR-DC, the NE-DC, decision on the Layer 1-RSRP measurement result of the Pcell is performed; for the EN-DC, decision on the Layer 1-RSRP measurement result of the Pcell is performed.

If the configuration of the good cell signal quality relaxation measurement condition is used for the BFD, for the MR-DC, decision is performed for the primary secondary cell of the MN or SN; for the NE-DC, per cell decision on the Layer 1-RSRP measurement result of the primary secondary cell of the MN is performed; for EN- The DC, per cell decision on the Layer 1-RSRP measurement result of the primary secondary cell of the SN is performed.

As illustrated in FIG. 7, embodiments of the disclosure provides an apparatus for processing UAI, which includes:

The first determining module 110 is configured to determine whether to enable a prohibition timer according to a configuration of a relaxation measurement condition, in which during running of the prohibition timer, the UE is prohibited from sending UAI about whether the relaxation measurement condition is met.

The configuration of the relaxation measurement condition indicates: a relaxation measurement condition of radio link monitoring (RLM) and/or a relaxation measurement condition of beam failure detection (BFD).

The apparatus for processing UAI may be included in the UE.

In some embodiments, the first determining module 110 may include a program module. When the program module is executed by the processor, the determination of whether to enable the prohibition timer is implemented.

In some other embodiments, the first determining module 110 may include a software and hardware module. The software and hardware module may include a programmable circuit. The programmable circuit includes but is not limited to a field programmable circuit and/or a complex programmable programming circuit.

In some other embodiments, the first determining module 110 may include a pure hardware module. The pure hardware module may include various application-specific integrated circuits.

In some embodiments, the configuration of the relaxation measurement condition includes:

In some embodiments, the configuration of the relaxation measurement condition includes:
a configuration of a good cell signal quality relaxation measurement condition;
   and/or,
a configuration of a low mobility relaxation measurement condition.

In an embodiment, the configuration of the relaxation measurement condition includes:
a configuration of a good cell signal quality relaxation measurement condition;
   or,
a configuration of a low mobility relaxation measurement condition and a configuration of a good cell signal quality relaxation measurement condition.

The configuration of the good cell signal quality relaxation measurement condition is at least used to determine the good cell signal quality relaxation measurement condition; the configuration of the low mobility relaxation measurement condition is at least used to determine the low mobility relaxation measurement condition.

In some embodiments, the first determining module 110 is configured to, for the RLM or for single-cell BFD, when the configuration of the good cell signal quality relaxation measurement condition includes a decision duration, determine not to enable the prohibition timer; or, for the RLM or for single-cell BFD, when the configuration of the good cell signal quality relaxation measurement condition does not include a decision duration, determine to enable the prohibition timer.

In some embodiments, the apparatus further includes:
a first sending module, configured to send the UAI after the decision duration is exceeded when the configuration of the good cell signal quality relaxation measurement condition includes the decision duration.

In some embodiments, the first sending module is configured to, when the configuration of the good cell signal quality relaxation measurement condition includes the decision duration, and when a duration in which a measurement signal value of the UE is greater than a first threshold reaches the decision duration, send UAI indicating that the relaxation measurement condition is met after the decision duration is exceeded;
or,
when the configuration of the good cell signal quality relaxation measurement condition includes the decision duration, and when a duration in which a measurement signal value of the UE is not greater than a first threshold reaches the decision duration, send UAI indicating that the relaxation measurement condition is not met after the decision duration is exceeded.

In some embodiments, the configuration of the relaxation measurement condition includes: the configuration of the low mobility relaxation measurement condition and the configuration of the good cell signal quality relaxation measurement condition, and a decision duration included in the configuration of the good cell signal quality relaxation measurement condition reuses a duration threshold defined by the configuration of the low mobility relaxation measurement condition.

In some embodiments, the first determining module 110 is configured to, for the RLM or for single-cell BFD, when the configuration of the low mobility relaxation measurement condition defines a duration threshold, determine not to enable the prohibition timer.

In some embodiments, whether the good cell signal quality relaxation measurement condition is met and whether the low mobility relaxation measurement condition is met are indicated by the same UAI indicating whether the UE meets the relaxation measurement condition.

In some embodiments, the apparatus includes:

a second sending module, configured to, when both the good cell signal quality relaxation measurement condition and the low mobility relaxation measurement condition are met, send UAI indicating that the relaxation measurement condition is met to a base station; or, when at least one of the good cell signal quality relaxation measurement condition or the low mobility relaxation measurement condition is not met, send UAI indicating that the relaxation measurement condition is not met to a base station.

In some embodiments, whether the good cell signal quality relaxation measurement condition is met and whether the low mobility relaxation measurement condition is met are indicated by different pieces of UAI indicating whether the UE meets the relaxation measurement condition, respectively.

In some embodiments, the configuration of the relaxation measurement condition includes the configuration of the good cell signal quality relaxation measurement condition, and the RLM and the BFD uses a same configuration of the good cell signal quality relaxation measurement condition;
or,
the configuration of the relaxation measurement condition includes the configuration of the good cell signal quality relaxation measurement condition, and different configurations of the good cell signal quality relaxation measurement condition are configured for the RLM and the BFD respectively.

In some embodiments, the configuration of the relaxation measurement condition includes the configuration of the low mobility relaxation measurement condition and the configuration of the good cell signal quality relaxation measurement condition, and the RLM and the BFD uses a same configuration of the low mobility relaxation measurement condition and different configurations of the good cell signal quality relaxation measurement condition are configured for the RLM and the BFD respectively;
or,
the configuration of the relaxation measurement condition includes the configuration of the low mobility relaxation measurement condition and the configuration of the good cell signal quality relaxation measurement condition, and the RLM and the BFD uses a same configuration of the low mobility relaxation measurement condition and a same configuration of the good cell signal quality relaxation measurement condition.

In some embodiments, the apparatus further includes:
a second determination module, configured to, when the configuration of the relaxation measurement condition includes the configuration of the low mobility relaxation measurement condition and the configuration of the good cell signal quality relaxation measurement condition, determine to report the UAI about whether the UE meets the relaxation measurement condition according to a combined decision switch.

In some embodiments, the second determining module is configured to perform at least one of:
when the combined decision switch is a first value and when it is determined that both the low mobility relaxation measurement condition and the good cell signal quality relaxation measurement condition are met, sending the UAI indicating that the relaxation measurement condition is met;
when the combined decision switch is a first value and when it is determined that at least one of the low mobility relaxation measurement condition or the good cell signal quality relaxation measurement condition is not met, sending the UAI indicating that the relaxation measurement condition is not met;
when the combined decision switch is a second value and when it is determined that the good cell signal quality relaxation measurement condition is met, sending the UAI indicating that the relaxation measurement condition is met; or
when the combined decision switch is a second value and when at least one of the low mobility relaxation measurement condition or the good cell signal quality relaxation measurement condition is met, sending the UAI indicating that the relaxation measurement condition is met.

In some embodiments, the combined decision switch is determined according to a protocol agreement;
or,
the combined decision switch is determined according to a network configuration.

In some embodiments, the apparatus further includes:
a third determining module, configured to, for multi-cell BFD, determine to enable the prohibition timer.

In some embodiments, the apparatus further includes:
a third sending module, configured to, for the multi-cell BFD, send UAI carrying a cell list according to a met relaxation measurement condition, in which the cell list includes a cell identification, and the cell identification includes: a cell identification of a cell that meets the relaxation measurement condition; or, a cell identification of a cell that does not meet the relaxation measurement condition.

In some embodiments, the third sending module includes: a creation submodule configured to create the cell list for the multi-cell BFD; and
a sending submodule, configured to send the UAI carrying the cell list when the prohibition timer expires.

In some embodiments, the creating submodule is further configured to perform at least one of:
when a primary cell of the UE meets the relaxation measurement condition, creating the cell list including a cell identification of the primary cell;
when a secondary cell of the UE meets the relaxation measurement condition, adding a cell identification of the secondary cell that meets the relaxation measurement condition to the cell list; or
when a secondary cell whose cell identification is in the cell list does not meet the relaxation measurement condition, deleting the cell identification of the secondary cell that does not meet the relaxation measurement condition from the cell list.

In some embodiments, the apparatus further includes:
a clearing module, configured to clear or delete the cell list when the primary cell of the UE does not meet the relaxation measurement condition.

The third sending module is further configured to send UAI indicating not expecting relaxation measurement when the cell list is empty or the cell list is deleted.

In some embodiments, the third sending module is further configured to, when a cell identification in the cell list is updated, send the UAI carrying an updated cell list when the prohibition timer expires; in which, the cell identification in the cell list being updated includes: adding and/or deleting the cell identification in the cell list.

As illustrated in FIG. 8, embodiments of the disclosure provides an apparatus for processing UAI, which is performed by a base station, the method includes:
a receiving module 210, configured to receive UAI indicating whether a user equipment (UE) meets a relaxation measurement condition, in which the UAI is reported by the UE according to timing information included in a configuration of the relaxation measurement condition, or according to a prohibition timer when the configuration of the relaxation measurement condition does not include the timing information;

The configuration of the relaxation measurement condition indicates: a relaxation measurement condition of radio link monitoring (RLM) and/or a relaxation measurement condition of beam failure detection (BFD).

In some embodiments, the receiving module 210 may include a program module. When the program module is executed by a processor, the above-mentioned UAI can be realized.

In some other embodiments, the receiving module 210 may include a software and hardware module. The software and hardware modules may include a programmable circuit. The programmable circuit includes but is not limited to a field programmable circuit and/or a complex programmable circuit.

In some other embodiments, the receiving module 210 may include a pure hardware module. The pure hardware modules may include various application-specific integrated circuits.

In some embodiments, the configuration of the relaxation measurement condition includes:
a configuration of a good cell signal quality relaxation measurement condition;
   and/or
a configuration of a low mobility relaxation measurement condition.

In some embodiments, the configuration of the relaxation measurement condition includes:
a configuration of a good cell signal quality relaxation measurement condition;
   or,
the configuration of the good cell signal quality relaxation measurement condition and the configuration of the low mobility relaxation measurement condition;

The configuration of the good cell signal quality relaxation measurement condition is at least used to determine the good cell signal quality relaxation measurement condition; the configuration of the low mobility relaxation measurement condition is at least used to determine the low mobility relaxation measurement condition.

In some embodiments, the configuration of the good cell signal quality relaxation measurement condition includes a decision duration, and for the RLM or for single-cell BFD, the UAI is reported when the decision duration is exceeded;
or,
the configuration of the good cell signal quality relaxation measurement condition does not include the decision duration, and for the RLM or for single-cell BFD, the UAI is reported when the prohibition timer expires.

In some embodiments, the configuration of the relaxation measurement condition includes: the configuration of the low mobility relaxation measurement condition and the configuration of the good cell signal quality relaxation measurement condition, and a decision duration included in the configuration of the good cell signal quality relaxation measurement condition reuses a duration threshold defined by the configuration of the low mobility relaxation measurement condition.

In some embodiments, the configuration of the low mobility relaxation measurement condition defines the duration threshold, and for the RLM or for single-cell BFD, the UAI is reported when the duration threshold is reached;
or,
the configuration of the low mobility relaxation measurement condition does not include the decision duration, and for the RLM or for single-cell BFD, the UAI is reported when the prohibition timer expires.

In some embodiments, or multi-cell BFD, the UAI is reported during the prohibition timer.

In some embodiments, for the multi-cell BFD, the UAI includes a cell list; a cell identification contained in the cell list includes: a cell that meets the relaxation measurement condition, or a cell that does not meet the relaxation measurement condition.

In some embodiments, the apparatus further includes:
a fourth sending module, configured to send a network configuration including a combined decision switch when the configuration of the relaxation measurement condition includes the configuration of the low mobility relaxation measurement condition and the configuration of the good cell signal quality relaxation measurement condition.

UAI indicating that the UE meets the relaxation measurement condition is sent by the UE when the combined decision switch is a first value and when both the low mobility relaxation measurement condition and the good cell signal quality relaxation measurement condition are met.

Or,
UAI indicating that the UE does not meet the relaxation measurement condition is sent by the UE when the combined decision switch is a first value and when at least one of the low mobility relaxation measurement condition or the good cell signal quality relaxation measurement condition is not met.

Or,
UAI indicating that the UE meets the relaxation measurement condition is sent by the UE when the combined decision switch is a second value and when the good cell signal quality relaxation measurement condition is met.

Or,
A UAI indicating that the UE meets the relaxation measurement condition is sent by the UE is when the combined decision switch is a second value and when at least one of the good cell signal quality relaxation measurement condition or the low mobility relaxation measurement condition is met.

In some embodiments, the configuration of the relaxation measurement condition includes the configuration of the good cell signal quality relaxation measurement condition, and a same configuration of the good cell signal quality relaxation measurement condition is set for the RLM and the BFD. For example, the configuration of the relaxation measurement condition is the configuration of the good cell signal quality relaxation measurement condition, and the RLM and the BFD share one configuration of the good cell signal quality relaxation measurement condition;
or,
the configuration of the relaxation measurement condition includes the configuration of the good cell signal quality relaxation measurement condition, and different configurations of the good cell signal quality relaxation measurement condition are set for the RLM and the BFD respectively.

In some embodiments, the configuration of the relaxation measurement condition includes the configuration of the low mobility relaxation measurement condition and the configuration of the good cell signal quality relaxation measurement condition, and a same configuration of the low mobility relaxation measurement condition is set for the RLM and the BFD and different configurations of the good cell signal quality relaxation measurement condition are set for the RLM and the BFD respectively. For example, the configuration of the relaxation measurement condition is the configuration of the low mobility relaxation measurement condition and the configuration of the good cell signal quality relaxation measurement condition, the RLM and the BFD share one configuration of the low mobility relaxation measurement condition, the RLM and the BFD are configured with different configurations of the good cell signal quality relaxation measurement condition respectively;
or,

The configuration of the relaxation measurement condition includes the configuration of the low mobility relaxation measurement condition and the configuration of the good cell signal quality relaxation measurement condition, and a same configuration of the low mobility relaxation measurement condition is set for the RLM and the BFD and a same configuration of the good cell signal quality relaxation measurement condition is set for the RLM and the BFD. For example, the configuration of the relaxation measurement condition is the configuration of the low mobility relaxation measurement condition and the configuration of the good cell signal quality relaxation measurement condition, the RLM and the BFD share the same configuration of the low mobility relaxation measurement condition, and share the same configuration of the good cell signal quality relaxation measurement condition.

In some embodiments, the configuration of the relaxation measurement condition includes the configuration of the low mobility relaxation measurement condition and the configuration of the good cell signal quality relaxation measurement condition.

UAI indicates that the low mobility relaxation measurement condition is met and that the good cell signal quality relaxation measurement condition is met.

Or,
UAI indicating that the low mobility relaxation measurement condition is met and UAI indicating that the good cell signal quality relaxation measurement condition is met are different.

Embodiments of the present disclosure provide a communication device, including:
a memory for storing processor-executable instructions; and
a processor, coupled to the memory.

The processor is configured to perform the method for processing UAI provided by any of the aforementioned technical solutions.

The processor may include various types of storage media, which are non-transitory computer storage media, and can continue to memorize and store information thereon after the communication device is powered off.

The communication device includes: a UE or a base station.

The processor may be connected to the memory through a bus or the like, and is used to read the executable program stored on the memory, for example, at least one of the methods shown in FIG. 2 to FIG. 6.

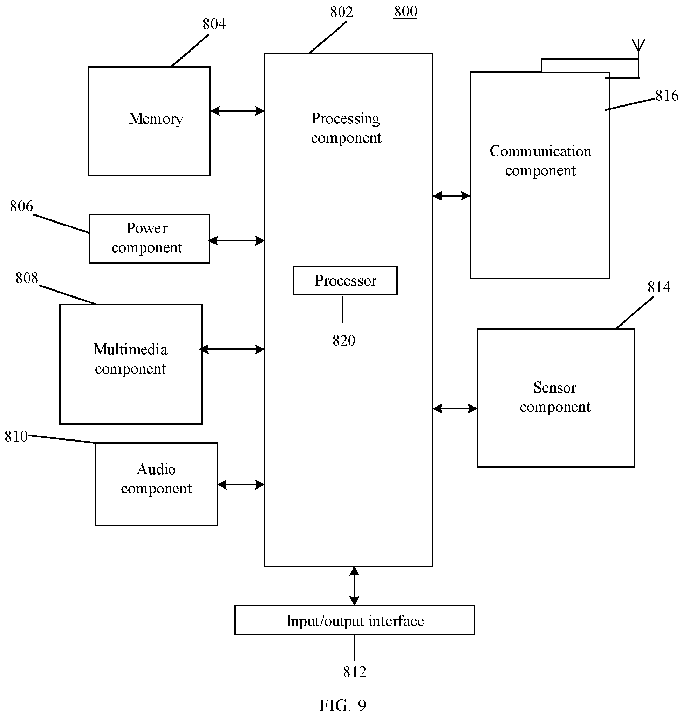

FIG. 9 is a block diagram illustrating a UE 800 according to an embodiment of the disclosure. For example, the UE 800 may be a mobile phone, a computer, a digital broadcasting terminal device, a message transceiver device, a game console, a tablet device, a medical device, a fitness device and a personal digital assistant.

As illustrated in FIG. 9, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and a user. In some embodiments, the screen may include a Liquid Crystal Display (LCD) and a Touch Panel (TP). In case that the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 813 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 813 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 813 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G or 3G, or a combination thereof. In an embodiment, the communication component 816 receives a broadcast signal from an external broadcast management system or broadcasts associated information via a broadcast channel. In an embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

In an exemplary embodiment, there is also provided a non-transitory computer-readable storage medium including instructions, such as the memory 804 including instructions, which can be executed by the processor 820 of the UE 800 for performing the above method. For example, the non-transitory computer readable storage medium may be a ROM, a random access memory (RAM), a CD-ROM, a magnetic tape, a floppy disk, an optical data storage device, and the like.

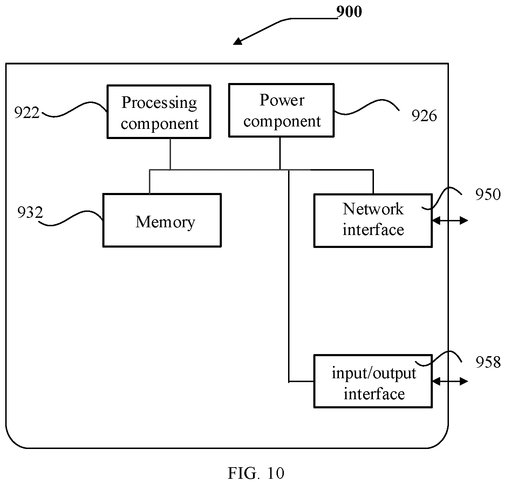

FIG. 10 is a block diagram illustrating a communication device 900 of an embodiment of the disclosure. For example, the communication device 900 may be provided as a network device, such as a base station.

As illustrated in FIG. 10, the communication device 900 includes a processing component 922 consisting of one or more processors, and memory resources represented by a memory 932 for storing instructions that may be executed by the processing component 922, such as applications. The application programs stored in the memory 932 may include one or more modules each corresponding to a set of instructions. In addition, the processing component 922 is configured to execute the instructions to perform any of the methods described foregoing that are applicable to the access device, for example, the methods shown in FIGs. 4-6.

The communication device 900 may also include a power component 926 configured to perform power management of the communication device 900, a wired or wireless network interface 950 configured to connect the communication device 900 to a network, and an I/O interface 958. The communication device 900 may operate based on an operating system stored in the memory 932, such as Windows Server ^{™}, Mac OS X^{™}, Unix^{™}, Linux^{™}, FreeBSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for processing user auxiliary information (UAI), performed by a user equipment (UE), comprising:
determining whether to enable a prohibition timer according to a configuration of a relaxation measurement condition, wherein during running of the prohibition timer, the UE is prohibited from sending UAI about whether the relaxation measurement condition is met;
wherein the configuration of the relaxation measurement condition indicates: a measurement relaxation condition of radio link monitoring (RLM) and/or a measurement relaxation condition of beam failure detection (BFD).

2. The method according to claim 1, wherein the configuration of the relaxation measurement condition comprises:
a configuration of a good cell signal quality relaxation measurement condition;
and/or,
a configuration of a low mobility relaxation measurement condition;
wherein, the configuration of the good cell signal quality relaxation measurement condition is at least used to determine a good cell signal quality relaxation measurement condition; the configuration of the low mobility relaxation measurement condition is at least used to determine a low mobility relaxation measurement condition.

3. The method according to claim 2, wherein determining whether to enable the prohibition timer according to the configuration of the relaxation measurement condition comprises:
determining not to enable the prohibition timer for the RLM or for single-cell BFD, when the configuration of the good cell signal quality relaxation measurement condition comprises a decision duration;
or,
determining to enable the prohibition timer for the RLM or for single-cell BFD, when the configuration of the good cell signal quality relaxation measurement condition does not comprise a decision duration.

4. The method according to claim 3, further comprising:
sending the UAI when the configuration of the good cell signal quality relaxation measurement condition comprises the decision duration and the decision duration is exceeded.

5. The method according to claim 4, wherein sending the UAI when the configuration of the good cell signal quality relaxation measurement condition comprises the decision duration and the decision duration is exceeded comprises:
sending UAI indicating that the relaxation measurement condition is met after the decision duration is exceeded, when the configuration of the good cell signal quality relaxation measurement condition comprises the decision duration, and when a duration in which a measurement signal value of the UE is greater than a first threshold reaches the decision duration;
or,
sending UAI indicating that the relaxation measurement condition is not met after the decision duration is exceeded, when the configuration of the good cell signal quality relaxation measurement condition comprises the decision duration, and when a duration in which a measurement signal value of the UE is not greater than a first threshold reaches the decision duration.

6. The method according to claim 2, wherein the configuration of the relaxation measurement condition comprises: the configuration of the low mobility relaxation measurement condition and the configuration of the good cell signal quality relaxation measurement condition, and a decision duration comprised in the configuration of the good cell signal quality relaxation measurement condition reuses a duration threshold defined by the configuration of the low mobility relaxation measurement condition.

7. The method according to claim 2 or 6, wherein determining whether to enable the prohibition timer according to the configuration of the relaxation measurement condition comprises:
determining not to enable the prohibition timer for the RLM or for single-cell BFD, when the configuration of the low mobility relaxation measurement condition defines a duration threshold.

8. The method according to claim 6 or 7, wherein whether the good cell signal quality relaxation measurement condition is met and whether the low mobility relaxation measurement condition is met are indicated by a same piece of UAI indicating whether the UE meets the relaxation measurement condition.

9. The method according to claim 8, further comprising:
sending UAI indicating that the relaxation measurement condition is met to a base station when both the good cell signal quality relaxation measurement condition and the low mobility relaxation measurement condition are met;
or,
sending UAI indicating that the relaxation measurement condition is not met to a base station when at least one of the good cell signal quality relaxation measurement condition or the low mobility relaxation measurement condition is not met.

10. The method according to claim 8, wherein whether the good cell signal quality relaxation measurement condition is met and whether the low mobility relaxation measurement condition is met are indicated by different pieces of UAIs indicating whether the UE satisfies the relaxation measurement condition.

11. The method according to any one of claims 2 to 10, wherein the configuration of the relaxation measurement condition comprises the configuration of the good cell signal quality relaxation measurement condition, and a same configuration of the good cell signal quality relaxation measurement condition is set for the RLM and the BFD;
or,
the configuration of the relaxation measurement condition comprises the configuration of the good cell signal quality relaxation measurement condition, and different configurations of the good cell signal quality relaxation measurement condition are set for the RLM and the BFD.

12. The method according to any one of claims 2 to 10, wherein the configuration of the relaxation measurement condition comprises the configuration of the low mobility relaxation measurement condition and the configuration of the good cell signal quality relaxation measurement condition, and a same configuration of the low mobility relaxation measurement condition is set for the RLM and the BFD and different configurations of the good cell signal quality relaxation measurement condition are set for the RLM and the BFD;
or,
the configuration of the relaxation measurement condition comprises the configuration of the low mobility relaxation measurement condition and the configuration of the good cell signal quality relaxation measurement condition, and a same configuration of the low mobility relaxation measurement condition is set for the RLM and the BFD and a same configuration of the good cell signal quality relaxation measurement condition is set for the RLM and the BFD.

13. The method according to any one of claims 2, 5 to 12, further comprising:
determining to report the UAI about whether the UE meets the relaxation measurement condition according to a combined decision switch, when the configuration of the relaxation measurement condition comprises the configuration of the low mobility relaxation measurement condition and the configuration of the good cell signal quality relaxation measurement condition.

14. The method according to claim 13, wherein determining to report the UAI about whether the UE meets the relaxation measurement condition according to the combined decision switch comprises at least one of:
sending the UAI indicating that the relaxation measurement condition is met when the combined decision switch is a first value and both the low mobility relaxation measurement condition and the good cell signal quality relaxation measurement condition are met;
sending the UAI indicating that the relaxation measurement condition is not met when the combined decision switch is a first value and at least one of the low mobility relaxation measurement condition or the good cell signal quality relaxation measurement condition is not met;
sending the UAI indicating that the relaxation measurement condition is met when the combined decision switch is a second value and the good cell signal quality relaxation measurement condition is met; or
sending the UAI indicating that the relaxation measurement condition is met when the combined decision switch is a second value and at least one of the low mobility relaxation measurement condition or the good cell signal quality relaxation measurement condition is met.

15. The method according to claim 14, wherein the combined decision switch is determined according to a protocol agreement;
or,
the combined decision switch is determined according to a network configuration.

16. The method according to any one of claims 1 to 2, or 11 to 15, further comprising:
for multi-cell BFD, determining to enable the prohibition timer.

17. The method according to claim 16, further comprising:
for the multi-cell BFD, sending UAI carrying a cell list according to a met relaxation measurement condition, wherein the cell list comprises a cell identification, and the cell identification comprises: a cell identification of a cell that meets the relaxation measurement condition; or, a cell identification of a cell that does not meet the relaxation measurement condition.

18. The method according to claim 17, wherein, sending the UAI carrying the cell list according to the met relaxation measurement condition for the multi-cell BFD comprises:
creating the cell list for the multi-cell BFD; and
sending the UAI carrying the cell list when the prohibition timer expires.

19. The method according to claim 18, wherein, creating the cell list for the multi-cell BFD comprises at least one of:
creating the cell list comprising a cell identification of the primary cell when a primary cell of the UE meets the relaxation measurement condition;
adding a cell identification of the secondary cell that meets the relaxation measurement condition to the cell list when a secondary cell of the UE meets the relaxation measurement condition; or
deleting the cell identification of the secondary cell that does not meet the relaxation measurement condition from the cell list when a secondary cell whose cell identification is in the cell list does not meet the relaxation measurement condition.

20. The method according to claim 18 or 19, further comprising:
clearing or deleting the cell list when the primary cell of the UE does not meet the relaxation measurement condition; and
sending UAI indicating not expecting relaxation measurement when the cell list is empty or the cell list is deleted.

21. The method according to any one of claims 18 to 20, further comprising:
sending the UAI carrying an updated cell list when a cell identification in the cell list is updated and the prohibition timer expires; wherein, the cell identification in the cell list being updated comprises: adding and/or deleting the cell identification in the cell list.

22. A method for processing user auxiliary information (UAI), performed by a base station, comprising:
receiving UAI indicating whether a user equipment (UE) meets a relaxation measurement condition, wherein the UAI is reported by the UE according to timing information comprised in a configuration of the relaxation measurement condition, or according to a prohibition timer when the configuration of the relaxation measurement condition does not comprise the timing information;
wherein the configuration of the relaxation measurement condition indicates: a relaxation measurement condition of radio link monitoring (RLM) and/or a relaxation measurement condition of beam failure detection (BFD).

23. The method of claim 22, wherein the configuration of the relaxation measurement condition comprises:
a configuration of a good cell signal quality relaxation measurement condition;
or,
a configuration of a low mobility relaxation measurement condition and the configuration of the good cell signal quality relaxation measurement condition;
wherein, the configuration of the good cell signal quality relaxation measurement condition is at least used to determine the good cell signal quality relaxation measurement condition; the configuration of the low mobility relaxation measurement condition is at least used to determine the low mobility relaxation measurement condition.

24. The method according to claim 23, wherein the configuration of the good cell signal quality relaxation measurement condition comprises a decision duration, and for the RLM or for single-cell BFD, the UAI is reported when the decision duration is exceeded;
or,
the configuration of the good cell signal quality relaxation measurement condition does not comprise the decision duration, and for the RLM or for single-cell BFD, the UAI is reported when the prohibition timer expires.

25. The method according to claim 23, wherein the configuration of the relaxation measurement condition comprises: the configuration of the low mobility relaxation measurement condition and the configuration of the good cell signal quality relaxation measurement condition, and a decision duration comprised in the configuration of the good cell signal quality relaxation measurement condition reuses a duration threshold defined by the configuration of the low mobility relaxation measurement condition.

26. The method of claim 25, wherein,
the configuration of the low mobility relaxation measurement condition defines the duration threshold, and for the RLM or for single-cell BFD, the UAI is reported when the duration threshold is reached;
or,
the configuration of the low mobility relaxation measurement condition does not comprise the decision duration, and for the RLM or for single-cell BFD, the UAI is reported when the prohibition timer expires.

27. The method according to claim 24, wherein, for multi-cell BFD, the UAI is reported during the prohibition timer.

28. The method according to claim 27, wherein, for the multi-cell BFD, the UAI comprises a cell list; a cell identification contained in the cell list comprises: a cell that meets the relaxation measurement condition, or a cell that does not meet the relaxation measurement condition.

29. The method according to claim 23, further comprising:
sending a network configuration comprising a combined decision switch when the configuration of the relaxation measurement condition comprises the configuration of the low mobility relaxation measurement condition and the configuration of the good cell signal quality relaxation measurement condition;
wherein UAI indicating that the UE meets the relaxation measurement condition is sent by the UE when the combined decision switch is a first value and both the low mobility relaxation measurement condition and the good cell signal quality relaxation measurement condition are met;
or,
UAI indicating that the UE does not meet the relaxation measurement condition is sent by the UE when the combined decision switch is a first value and at least one of the low mobility relaxation measurement condition or the good cell signal quality relaxation measurement condition is not met;
or,
UAI indicating that the UE meets the relaxation measurement condition is sent by the UE when the combined decision switch is a second value and the good cell signal quality relaxation measurement condition is met;
or,
UAI indicating that the UE meets the relaxation measurement condition is sent by the UE is when the combined decision switch is a second value and at least one of the good cell signal quality relaxation measurement condition or the low mobility relaxation measurement condition is met.

30. The method according to any one of claims 22 to 29, wherein the configuration of the relaxation measurement condition comprises the configuration of the good cell signal quality relaxation measurement condition, and a same configuration of the good cell signal quality relaxation measurement condition is set for the RLM and the BFD;
or,
the configuration of the relaxation measurement condition comprises the configuration of the good cell signal quality relaxation measurement condition, and different configurations of the good cell signal quality relaxation measurement condition are set for the RLM and the BFD.

31. The method according to any one of claims 22 to 29, wherein the configuration of the relaxation measurement condition comprises the configuration of the low mobility relaxation measurement condition and the configuration of the good cell signal quality relaxation measurement condition, and a same configuration of the low mobility relaxation measurement condition is set for the RLM and the BFD and different configurations of the good cell signal quality relaxation measurement condition are set for the RLM and the BFD;
or,
the configuration of the relaxation measurement condition comprises the configuration of the low mobility relaxation measurement condition and the configuration of the good cell signal quality relaxation measurement condition, and a same configuration of the low mobility relaxation measurement condition is set for the RLM and the BFD and a same configuration of the good cell signal quality relaxation measurement condition is set for the RLM and the BFD.

32. The method according to claim 22, wherein the configuration of the relaxation measurement condition comprises the configuration of the low mobility relaxation measurement condition and the configuration of the good cell signal quality relaxation measurement condition;
one piece of UAI indicates both that the low mobility relaxation measurement condition is met and that the good cell signal quality relaxation measurement condition is met;
or,
UAI indicating that the low mobility relaxation measurement condition is met and UAI indicating that the good cell signal quality relaxation measurement condition is met are different.

33. An apparatus for processing user auxiliary information (UAI), comprising:
a first determining module, configured to determine whether to enable a prohibition timer according to a configuration of a relaxation measurement condition, wherein during running of the prohibition timer, the UE is prohibited from sending UAI about whether the relaxation measurement condition is met;
wherein the configuration of the relaxation measurement condition indicates: a relaxation measurement condition of radio link monitoring (RLM) and/or a relaxation measurement condition of beam failure detection (BFD).

34. The apparatus according to claim 32, wherein the configuration of the relaxation measurement condition comprises:
a configuration of a good cell signal quality relaxation measurement condition;
or,
a configuration of a low mobility relaxation measurement condition and a configuration of a good cell signal quality relaxation measurement condition;
wherein, the configuration of the good cell signal quality relaxation measurement condition is at least used to determine a good cell signal quality relaxation measurement condition; the configuration of the low mobility relaxation measurement condition is at least used to determine a low mobility relaxation measurement condition.

35. The apparatus according to claim 34, wherein the first determining module is configured to, determine not to enable the prohibition timer for the RLM or for single-cell BFD, when the configuration of the good cell signal quality relaxation measurement condition comprises a decision duration; or, determine to enable the prohibition timer for the RLM or for single-cell BFD, when the configuration of the good cell signal quality relaxation measurement condition does not comprise a decision duration.

36. The apparatus according to claim 35, further comprising:
a first sending module, configured to send the UAI when the configuration of the good cell signal quality relaxation measurement condition comprises the decision duration and the decision duration is exceeded.

37. The apparatus according to claim 36, wherein the first sending module is configured to, send UAI indicating that the relaxation measurement condition is met after the decision duration is exceeded, when the configuration of the good cell signal quality relaxation measurement condition comprises the decision duration, and when a duration in which a measurement signal value of the UE is greater than a first threshold reaches the decision duration;
or,
send UAI indicating that the relaxation measurement condition is not met after the decision duration is exceeded, when the configuration of the good cell signal quality relaxation measurement condition comprises the decision duration, and when a duration in which a measurement signal value of the UE is not greater than a first threshold reaches the decision duration,.

38. The apparatus according to claim 34, wherein the configuration of the relaxation measurement condition comprises: the configuration of the low mobility relaxation measurement condition and the configuration of the good cell signal quality relaxation measurement condition, and a decision duration comprised in the configuration of the good cell signal quality relaxation measurement condition reuses a duration threshold defined by the configuration of the low mobility relaxation measurement condition.

39. The apparatus according to claim 34 or 38, wherein the first determining module is configured to, determine not to enable the prohibition timer for the RLM or for single-cell BFD, when the configuration of the low mobility relaxation measurement condition defines a duration threshold.

40. The apparatus according to claim 38 or 39, wherein whether the good cell signal quality relaxation measurement condition is met and whether the low mobility relaxation measurement condition is met are indicated by a same piece of UAI indicating whether the UE meets the relaxation measurement condition.

41. The apparatus according to claim 40, further comprising:
a second sending module, configured to send UAI indicating that the relaxation measurement condition is met to a base station when both the good cell signal quality relaxation measurement condition and the low mobility relaxation measurement condition are met; or, send UAI indicating that the relaxation measurement condition is not met to a base station when at least one of the good cell signal quality relaxation measurement condition or the low mobility relaxation measurement condition is not met.

42. The apparatus according to claim 40, wherein whether the good cell signal quality relaxation measurement condition is met and whether the low mobility relaxation measurement condition is met are indicated by different pieces of UAIs indicating whether the UE meets the relaxation measurement condition.

43. The apparatus according to any one of claims 34 to 42, wherein the configuration of the relaxation measurement condition comprises the configuration of the good cell signal quality relaxation measurement condition, and the RLM and the BFD uses a same configuration of the good cell signal quality relaxation measurement condition;
or,
the configuration of the relaxation measurement condition comprises the configuration of the good cell signal quality relaxation measurement condition, and different configurations of the good cell signal quality relaxation measurement condition are configured for the RLM and the BFD.

44. The apparatus according to any one of claims 34 to 42, wherein the configuration of the relaxation measurement condition comprises the configuration of the low mobility relaxation measurement condition and the configuration of the good cell signal quality relaxation measurement condition, and the RLM and the BFD uses a same configuration of the low mobility relaxation measurement condition and different configurations of the good cell signal quality relaxation measurement condition are configured for the RLM and the BFD;
or,
the configuration of the relaxation measurement condition comprises the configuration of the low mobility relaxation measurement condition and the configuration of the good cell signal quality relaxation measurement condition, and the RLM and the BFD uses a same configuration of the low mobility relaxation measurement condition and a same configuration of the good cell signal quality relaxation measurement condition.

45. The apparatus according to any one of claims 34, 36 to 44, further comprising:
a second determining module, configured to determine to report the UAI about whether the UE meets the relaxation measurement condition according to a combined decision switch when the configuration of the relaxation measurement condition comprises the configuration of the low mobility relaxation measurement condition and the configuration of the good cell signal quality relaxation measurement condition,.

46. The apparatus according to claim 45, wherein the second determining module is configured to perform at least one of:
send the UAI indicating that the relaxation measurement condition is met when the combined decision switch is a first value and both the low mobility relaxation measurement condition and the good cell signal quality relaxation measurement condition are met;
send the UAI indicating that the relaxation measurement condition is not met when the combined decision switch is a first value and at least one of the low mobility relaxation measurement condition or the good cell signal quality relaxation measurement condition is not met;
send the UAI indicating that the relaxation measurement condition is met when the combined decision switch is a second value and the good cell signal quality relaxation measurement condition is met; or
send the UAI indicating that the relaxation measurement condition is met when the combined decision switch is a second value and at least one of the low mobility relaxation measurement condition or the good cell signal quality relaxation measurement condition is met.

47. The apparatus according to claim 46, wherein the combined decision switch is determined according to a protocol agreement;
or,
the combined decision switch is determined according to a network configuration.

48. The apparatus according to any one of claims 33 to 34, or 44 to 47, further comprising:
a third determining module, configured to, for multi-cell BFD, determine to enable the prohibition timer.

49. The apparatus according to claim 48, further comprising:
a third sending module, configured to, for the multi-cell BFD, send UAI carrying a cell list according to a met relaxation measurement condition, wherein the cell list comprises a cell identification, and the cell identification comprises: a cell identification of a cell that meets the relaxation measurement condition; or, a cell identification of a cell that does not meet the relaxation measurement condition.

50. The apparatus according to claim 49, wherein, the third sending module comprises: a creation submodule configured to create the cell list for the multi-cell BFD; and
a sending submodule, configured to send the UAI carrying the cell list when the prohibition timer expires.

51. The apparatus according to claim 50, wherein the creating submodule is further configured to perform at least one of:
creating the cell list comprising a cell identification of the primary cell when a primary cell of the UE meets the relaxation measurement condition;
adding a cell identification of the secondary cell that meets the relaxation measurement condition to the cell list when a secondary cell of the UE meets the relaxation measurement condition; or
deleting the cell identification of the secondary cell that does not meet the relaxation measurement condition from the cell list when a secondary cell whose cell identification is in the cell list does not meet the relaxation measurement condition.

52. The apparatus according to claim 50 or 51, further comprising:
a clearing module, configured to clear or delete the cell list when the primary cell of the UE does not meet the relaxation measurement condition;
wherein the third sending module is further configured to send UAI indicating not excepting relaxation measurement when the cell list is empty or the cell list is deleted.

53. The apparatus according to any one of claims 50 to 52, wherein the third sending module is further configured to, send the UAI carrying an updated cell list when the prohibition timer expires when a cell identification in the cell list is updated; wherein, the cell identification in the cell list being updated comprises: adding and/or deleting the cell identification in the cell list.

54. An apparatus for processing user auxiliary information (UAI), performed by a base station, comprising:
a receiving module, configured to receive UAI indicating whether a user equipment (UE) meets a relaxation measurement condition, wherein the UAI is reported by the UE according to timing information comprised in a configuration of the relaxation measurement condition, or according to a prohibition timer when the configuration of the relaxation measurement condition does not comprise the timing information;
wherein the configuration of the relaxation measurement condition indicates: a relaxation measurement condition of radio link monitoring (RLM) and/or a relaxation measurement condition of beam failure detection (BFD).

55. The apparatus of claim 54, wherein the configuration of the relaxation measurement condition comprises:
a configuration of a good cell signal quality relaxation measurement condition;
and/or,
a configuration of a low mobility relaxation measurement condition;
wherein, the configuration of the good cell signal quality relaxation measurement condition is at least used to determine the good cell signal quality relaxation measurement condition; the configuration of the low mobility relaxation measurement condition is at least used to determine the low mobility relaxation measurement condition.

56. The apparatus according to claim 55, wherein the configuration of the good cell signal quality relaxation measurement condition comprises a decision duration, and for the RLM or for single-cell BFD, the UAI is reported when the decision duration is exceeded;
or,
the configuration of the good cell signal quality relaxation measurement condition does not comprise the decision duration, and for the RLM or for single-cell BFD, the UAI is reported when the prohibition timer expires.

57. The apparatus according to claim 55, wherein the configuration of the relaxation measurement condition comprises: the configuration of the low mobility relaxation measurement condition and the configuration of the good cell signal quality relaxation measurement condition, and a decision duration comprised in the configuration of the good cell signal quality relaxation measurement condition reuses a duration threshold defined by the configuration of the low mobility relaxation measurement condition.

58. The apparatus of claim 57, wherein,
the configuration of the low mobility relaxation measurement condition defines the duration threshold, and for the RLM or for single-cell BFD, the UAI is reported when the duration threshold is reached;
or,
the configuration of the low mobility relaxation measurement condition does not comprise the decision duration, and for the RLM or for single-cell BFD, the UAI is reported when the prohibition timer expires.

59. The apparatus according to claim 56, wherein, for multi-cell BFD, the UAI is reported during the prohibition timer.

60. The apparatus according to claim 59, wherein, for the multi-cell BFD, the UAI comprises a cell list; a cell identification contained in the cell list comprises: a cell that meets the relaxation measurement condition, or a cell that does not meet the relaxation measurement condition.

61. The apparatus according to claim 55, further comprising:
a fourth sending module, configured to send a network configuration comprising a combined decision switch when the configuration of the relaxation measurement condition comprises the configuration of the low mobility relaxation measurement condition and the configuration of the good cell signal quality relaxation measurement condition;
wherein, UAI indicating that the UE meets the relaxation measurement condition is sent by the UE when the combined decision switch is a first value and when both the low mobility relaxation measurement condition and the good cell signal quality relaxation measurement condition are met;
or,
UAI indicating that the UE does not meet the relaxation measurement condition is sent by the UE when the combined decision switch is a first value and when at least one of the low mobility relaxation measurement condition or the good cell signal quality relaxation measurement condition is not met;
or,
UAI indicating that the UE meets the relaxation measurement condition is sent by the UE when the combined decision switch is a second value and when the good cell signal quality relaxation measurement condition is met;
or,
UAI indicating that the UE meets the relaxation measurement condition is sent by the UE is when the combined decision switch is a second value and when at least one of the good cell signal quality relaxation measurement condition or the low mobility relaxation measurement condition is met.

62. The apparatus according to any one of claims 54 to 61, wherein the configuration of the relaxation measurement condition comprises the configuration of the good cell signal quality relaxation measurement condition, and a same configuration of the good cell signal quality relaxation measurement condition is set for the RLM and the BFD;
or,
the configuration of the relaxation measurement condition comprises the configuration of the good cell signal quality relaxation measurement condition, and different configurations of the good cell signal quality relaxation measurement condition are set for the RLM and the BFD.

63. The apparatus according to any one of claims 22 to 29, wherein the configuration of the relaxation measurement condition comprises the configuration of the low mobility relaxation measurement condition and the configuration of the good cell signal quality relaxation measurement condition, and a same configuration of the low mobility relaxation measurement condition is set for the RLM and the BFD and different configurations of the good cell signal quality relaxation measurement condition are set for the RLM and the BFD;
or,
the configuration of the relaxation measurement condition comprises the configuration of the low mobility relaxation measurement condition and the configuration of the good cell signal quality relaxation measurement condition, and a same configuration of the low mobility relaxation measurement condition is set for the RLM and the BFD and a same configuration of the good cell signal quality relaxation measurement condition is set for the RLM and the BFD.

64. The apparatus according to claim 54, wherein the configuration of the relaxation measurement condition comprises the configuration of the low mobility relaxation measurement condition and the configuration of the good cell signal quality relaxation measurement condition;
one piece of UAI indicates both that the low mobility relaxation measurement condition is met and that the good cell signal quality relaxation measurement condition is met;
or,
UAI indicating that the low mobility relaxation measurement condition is met and UAI indicating that the good cell signal quality relaxation measurement condition is met are different.

65. A communication device, comprising a processor, a transceiver, a memory, and an executable program stored on the memory and capable of being executed by the processor; wherein, when the processor executes the executable program, the method of any of claims 1-21 or 22-32 is performed.

66. A computer storage medium having an executable program stored thereon, wherein when the executable program is executed by a processor, the method of any of claims 1-21 or 22-32 is performed.
